(19) Europäisches Patentamt
European Patent Office
Office européen des brevets

(11) EP 3 284 766 A1

(12) **DEMANDE DE BREVET EUROPEEN**

(43) Date de publication:
**21.02.2018 Bulletin 2018/08**

(21) Numéro de dépôt: **17182345.3**

(22) Date de dépôt: **20.07.2017**

(51) Int Cl.:
*C08G 61/08* (2006.01) *C08G 61/12* (2006.01)
*C08G 71/04* (2006.01) *C08G 75/14* (2006.01)
*C09J 165/00* (2006.01) *C08L 65/00* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **16.08.2016 FR 1657777**

(71) Demandeurs:
- **BOSTIK SA**
  **93210 La Plaine Saint Denis (FR)**
- **CENTRE NATIONAL DE LA RECHERCHE SCIENTIFIQUE**
  **75016 Paris (FR)**
- **Universite Rennes 1**
  **35065 Rennes Cedex (FR)**

(72) Inventeurs:
- **MICHAUD, Guillaume**
  **60200 COMPIEGNE (FR)**
- **SIMON, Frédéric**
  **60400 PONT L'EVEQUE (FR)**
- **FOUQUAY, Stéphane**
  **76130 MONT SAINT-AIGNAN (FR)**
- **VANBIERVLIET, Elise**
  **35000 RENNES (FR)**
- **GUILLAUME, Sophie**
  **35500 VITRE (FR)**
- **CARPENTIER, Jean-François**
  **35690 ACIGNE (FR)**

(74) Mandataire: **Granet, Pierre**
**ARKEMA France**
**Département Propriété Industrielle**
**420, rue d'Estienne d'Orves**
**92705 Colombes Cedex (FR)**

(54) **NOUVEAUX POLYMÈRES HYDROCARBONÉS À GROUPEMENTS TERMINAUX DITHIOCYCLOCARBONATE**

(57) La présente demande concerne un polymère hydrocarboné de formule (I) :

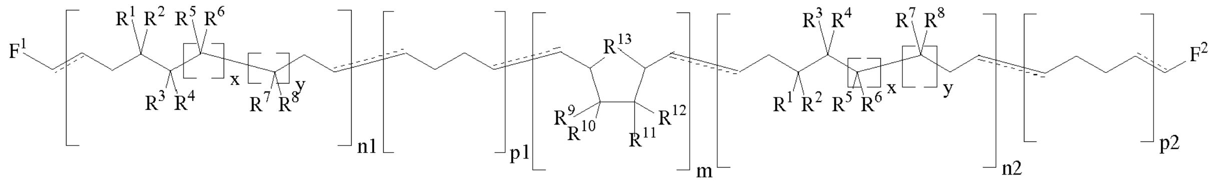

(I)

où $F^1$ et $F^2$ sont de formules respectives ou bien (IIa) et (IIb) ou bien (II'a) et (II'b) :

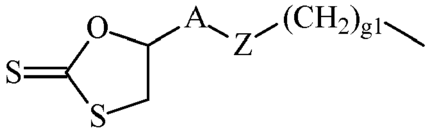

(IIa)

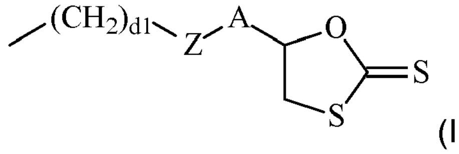

(IIb)

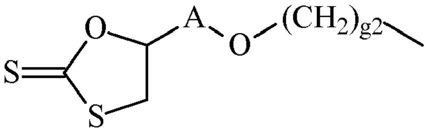

(II'a)

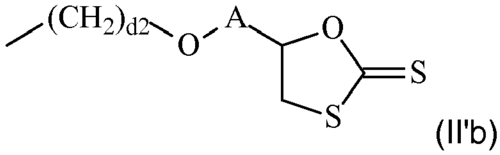

(II'b)

EP 3 284 766 A1

dans lesquelles :
- g1 et d1 sont égaux à 0, 1, 2 ou 3 ; g2 et d2 sont égaux à 1, 2 ou 3 ;
- A est un C1-C9 alkylène ; Z est tel que -A-Z- est -A-C(=O)O- et-Z-A- est - OC(=O)-A- ou bien -A-Z- est -A-OC(=O)- et -Z-A- est-C(=O)O-A- ;
- $R^1$ à $R^{12}$ sont H ou un C1-C14 alkyle ; $R^{13}$ est O ou $-CH_2-$ ; x égale 1 et y égale 1 ;
- n1 et n2 sont un nombre entier ou nul ; m est un nombre entier ou nul ; p1 et p2 sont un nombre entier ou nul de somme non nulle ; n1, n2, m, p1 et p2 étant tels que la masse moléculaire dudit polymère va de 400 à 100 000 g/mol. En outre, la présente demande divulgue un procédé de préparation dudit polymère par polymérisation par ouverture de cycle par métathèse et son utilisation comme adhésif en mélange avec un composé aminé comprenant au moins 2 groupements amine.

## Description

La présente invention se rapporte à des polymères hydrocarbonés comprenant deux groupements terminaux (2-thione-1,3-oxathiolan-4-yl) (aussi désignés polymères hydrocarbonés à terminaisons « dithiocyclocarbonate » dans la présente demande), leur procédé de préparation et leur utilisation pour la fabrication de compositions de revêtements, de mastics ou d'adhésifs.

Il est connu d'utiliser des polyuréthanes pour fabriquer diverses compositions de revêtements, de mastics ou d'adhésifs.

Ces compositions peuvent être sous forme de compositions monocomposant ou bicomposant. Dans ce dernier cas, les réactifs nécessaires à la synthèse du polyuréthane, sont stockés de manière séparée, éventuellement en présence d'autres ingrédients (additifs), et sont destinés à être mélangés avant utilisation de la composition, pour synthétiser le polyuréthane au dernier moment.

La synthèse de polyuréthanes se fait traditionnellement par réaction d'un diisocyanate avec un diol.

Or les diisocyanates sont des composés toxiques en tant que tels, et sont généralement obtenus à partir de phosgène, lui-même très toxique par inhalation ou par contact. Le procédé de fabrication utilisé dans l'industrie met généralement en oeuvre la réaction d'une amine avec un excès de phosgène pour former un isocyanate.

De plus, les polyisocyanates sont des composés très sensibles en présence d'humidité atmosphérique et nécessitent de prendre des mesures appropriées pour éviter leur réticulation prématurée, et donc leur perte de réactivité, au cours de leur manipulation et de leur stockage (conditions anhydres).

La recherche d'alternatives à la synthèse de polyuréthanes, sans utiliser d'isocyanate (ou NIPU pour « Non Isocyanate PolyUrethane » en anglais, c'est-à-dire « polyuréthane sans isocyanate »), représente donc un enjeu majeur.

Cette recherche a fait l'objet de nombreuses études. Les pistes les plus étudiées concernent l'utilisation de polymères susceptibles de réagir avec des amines ou oligomères d'amines pour former des polyuréthanes ou dérivés structurellement proches des polyuréthanes, tels que des poly(thio)uréthanes, que l'on désignera génériquement dans la présente demande par « polymères de type polyuréthane ».

La demande de brevet WO 2014/091173 au nom de Bostik et du CNRS, décrit des polymères hydrocarbonés comprenant deux groupements terminaux à terminaison (2-oxo-1,3-dioxolan-4-yl) susceptibles d'être obtenus par polymérisation par ouverture de cycle par métathèse à partir d'au moins une cyclooléfine cyclique, au moins un agent de transfert de chaine insaturé non cyclique comprenant un groupement terminal (2-oxo-1,3-dioxolan-4-yl), et au moins un catalyseur de métathèse.

Ces polymères peuvent ensuite réagir avec une (poly)amine pour former des polyuréthanes sans isocyanate possédant des fonctions hydroxyle qui peuvent être utilisés pour formuler des compositions de revêtements, de mastics ou d'adhésifs. Toutefois, cette réaction est relativement lente et reste à améliorer.

La demande de brevet WO 2005/016908 de HENKEL décrit la synthèse du dithiocyclocarbonate hydroxylé (DTC-OH) à 5 chaînons :

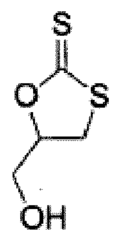

(DTC-OH)

et ses diverses utilisations pour former entre autres, des synthons (thio)uréthanes possédant des groupes thiols et hydroxyles, destinés à la fabrication d'adhésifs, de revêtement surface ou de mastics:

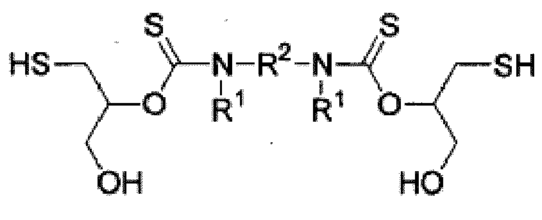

Ces synthons sont obtenus sans mise en oeuvre d'isocyanate, par réaction du (DTC-OH) avec une diamine.

Ils peuvent ensuite être réticulés sur eux-mêmes en présence de dioxygène et d'un catalyseur de réticulation pour atteindre des masses molaires supérieures à 500g/mol. Les poly(thio)uréthanes obtenus sont différents de ceux de la présente invention.

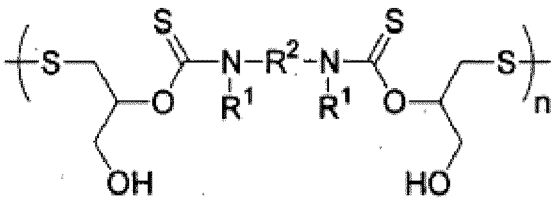

La demande de brevet WO 2005/016908 divulgue également l'utilisation du (DTC-OH) pour préparer des polyuréthanes usuels possédant deux groupes (2-thione-1,3-oxathiolan-4-yl)méthyloxycarbonyle terminaux (DTC-Polyuréthane) et de faibles masses molaires (inférieures à 2700 g/mol), mais leur fabrication met en oeuvre des isocyanates.

La présente invention a pour but de fournir de nouveaux intermédiaires de synthèse de polymères de type polyuréthane, destinés à la fabrication de compositions de revêtements, de mastics ou d'adhésifs, et remédiant en tout ou partie aux inconvénients de l'art antérieur.

En particulier, la présente invention a pour but de fournir de nouveaux intermédiaires dont la synthèse ne met pas en oeuvre d'isocyanates et qui sont capables de réagir plus rapidement avec une (poly)amine, par rapport aux polymères hydrocarbonés à terminaisons (2-oxo-1,3-dioxolan-4-yl) de la demande WO 2014/091173.

Ainsi, la présente invention concerne un polymère hydrocarboné comprenant deux groupements terminaux dithiocyclocarbonate, ledit polymère hydrocarboné ayant la formule (I) :

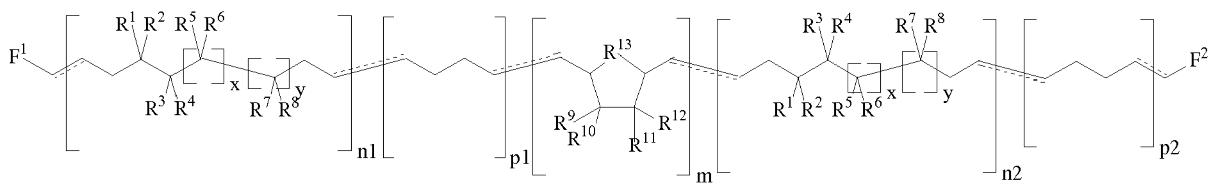

(I)

dans laquelle :

- $F^1$ et $F^2$ sont les radicaux monovalents de formules respectives (IIa) et (IIb) :

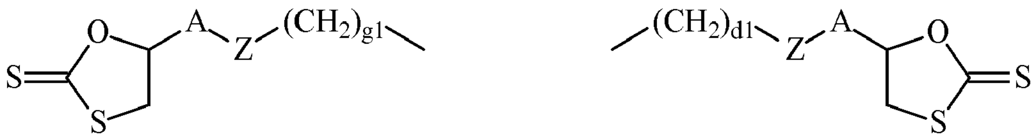

(IIa) (IIb)

ou bien $F^1$ et $F^2$ sont les radicaux monovalents de formules respectives (II'a) et (II'b) :

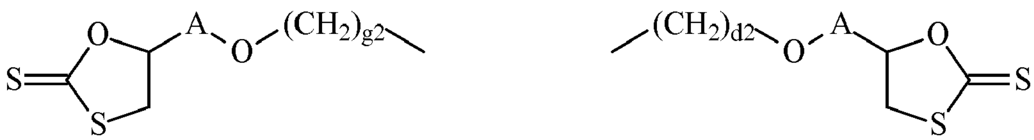

(II'a) (II'b)

dans lesquelles :

- g1 et d1, identiques ou différents, représentent un nombre entier égal à 0, 1, 2 ou 3 ;

- g2 et d2, identiques ou différents, représentent un nombre entier égal à 1, 2 ou 3;
- A représente un radical divalent C1-C9 alkylène ;
- Z est tel que :
- le groupe divalent -A-Z- est le groupe -A-C(=O)O- et le groupe divalent -Z-A- est le groupe-OC(=O)-A- sous réserve que g1 et d1 soient chacun différent de 0 ; ou bien
- le groupe divalent -A-Z- est le groupe -A-OC(=O)- et le groupe divalent -Z-A- est le groupe -C(=O)O-A- ;

- chaque liaison carbone - carbone de la chaîne principale du polymère, notée====== représente une double liaison ou une simple liaison, conformément aux règles de valence de la chimie organique ;
- $R^1$, $R^2$, $R^3$, $R^4$, $R^5$, $R^6$, $R^7$ et $R^8$, identiques ou différents, représentent :

  - un atome d'hydrogène ou d'halogène ; ou
  - un radical comprenant de 1 à 22 atomes de carbone choisi parmi alkyle, alcényle, alcoxycarbonyle, alcényloxycarbonyle, alkylcarbonyloxy, alcénylcarbonyloxy, la chaîne hydrocarbonée dudit radical pouvant éventuellement être interrompue par au moins un atome d'oxygène ou un atome de soufre ; en outre:
  - au moins un des groupes $R^1$ à $R^8$ peut former, avec au moins un autre des groupes $R^1$ à $R^8$ et avec le ou les atomes de carbone auxquels lesdits groupes sont reliés, un cycle ou hétérocycle hydrocarboné saturé ou insaturé, éventuellement substitué, et comprenant de 3 à 10 chaînons; et
  - au moins une des paires ($R^1$, $R^2$), ($R^3$, $R^4$), ($R^5$, $R^6$) et ($R^7$, $R^8$) peut former, avec l'atome de carbone auquel ladite paire est reliée, un groupe carbonyle C=O ou un groupe de 2 atomes de carbone reliés par une double liaison : C=C, dont l'autre atome de carbone porte 2 substituants choisis parmi un atome d'hydrogène ou un radical $C_1$-$C_4$ alkyle ;

- x et y sont des nombres entiers, identiques ou différents, compris dans une fourchette allant de 0 à 4, la somme x + y étant comprise dans une fourchette allant de 0 à 4 ;
- $R^9$, $R^{10}$, $R^{11}$ et $R^{12}$, identiques ou différents, représentent :

  - un atome d'hydrogène ou d'halogène ; ou
  - un radical comprenant de 1 à 22 atomes de carbone et choisi parmi alkyle, alcényle, alcoxycarbonyle, alcényloxycarbonyle, alkylcarbonyloxy, alcénylcarbonyloxy, alkylcarbonyloxyalkyl, la chaîne hydrocarbonée dudit radical pouvant éventuellement être interrompue par au moins un atome d'oxygène ou un atome de soufre ; en outre:
  - au moins un des groupes $R^9$ à $R^{12}$ peut former, avec au moins un autre des groupes $R^9$ à $R^{12}$ et avec le ou les atomes de carbone auxquels lesdits groupes sont reliés, un cycle ou hétérocycle hydrocarboné saturé ou insaturé, éventuellement substitué, et comprenant de 3 à 10 chaînons; et
  - au moins une des paires ($R^9$, $R^{10}$) et ($R^{11}$, $R^{12}$) peut former avec l'atome de carbone auquel ladite paire est reliée un groupe de 2 atomes de carbone reliés par une double liaison : C=C, dont l'autre atome de carbone porte 2 substituants choisis parmi un atome d'hydrogène ou un radical $C_1$-$C_4$ alkyle ; et
  - l'atome de carbone porteur de l'un des groupes de la paire ($R^9$, $R^{10}$) peut être relié à l'atome de carbone porteur de l'un des groupes de la paire ($R^{11}$, $R^{12}$) par une double liaison, étant entendu que, conformément aux règles de valence, un seul des groupes de chacune de ces 2 paires est alors présent ;

- $R^{13}$ représente :

  - un atome d'oxygène ou de soufre, ou
  - un radical divalent $-CH_2-$, -C(=O)- ou $-NR^0-$ dans lequel $R^0$ est un radical alkyle ou alcényle comprenant de 1 à 22 atomes de carbone ;

- n1 et n2, identiques ou différents, sont chacun un nombre entier ou nul dont la somme est désignée par n ;
- m est un nombre entier supérieur ou égal à 0 ;
- p1 et p2, identiques ou différents, sont chacun un nombre entier ou nul dont la somme p1 + p2 est non nulle et vérifie l'équation : p1 + p2 = q x (z + 1) dans laquelle :

  - q est un nombre entier supérieur à 0 ; et
  - z est un nombre entier allant de 1 à 5 ; et

- n1, n2, m, p1 et p2 étant en outre tels que la masse moléculaire moyenne en nombre Mn du polymère de formule (I) est comprise dans une fourchette allant de 400 à 100 000 g/mol et son indice de polymolécularité est compris

dans un domaine allant de 1,0 à 3,0.

Les divers groupes, radicaux et lettres qui sont compris dans la formule (I) et qui sont définis ci-dessus, conservent tout au long du présent texte, et, en l'absence d'indication contraire, la même définition.

Les variantes suivantes du polymère de formule (I), prises individuellement ou en combinaison, sont particulièrement préférées :

- $R^1$, $R^2$, $R^3$, $R^4$, $R^5$, $R^6$, $R^7$ et $R^8$ représentent un atome d'hydrogène ou un radical alkyle comprenant de 1 à 14 atomes de carbone, et encore plus préférentiellement de 1 à 8 ;
- les nombres entiers x et y sont compris dans une fourchette allant de 0 à 2, la somme x + y étant comprise dans une fourchette allant de de 0 à 2 ;
- x est égal à 1 et y est égal à 1 ;
- $R^9$, $R^{10}$, $R^{11}$ et $R^{12}$ représentent un atome d'hydrogène ou un radical dont la partie hydrocarbonée comprend de 1 à 14 atomes de carbone, et encore plus préférentiellement de 1 à 8 ;
- z est un nombre entier égal à 1 ou 2 ; et/ou
- la masse moléculaire moyenne en nombre Mn est comprise dans une fourchette allant de 1000 à 50 000 g/mol, et l'indice de polymolécularité est compris dans un domaine allant de 1,4 à 2,0.

Selon d'autres variantes plus particulièrement préférées du polymère de formule (I) :

- au plus un des groupes pris parmi ($R^1$, $R^2$, $R^3$, $R^4$, $R^5$, $R^6$, $R^7$ et $R^8$) est un radical $C_1$-$C_8$ alkyle et tous les autres représentent un atome d'hydrogène ;
- au plus un des groupes pris parmi ($R^9$, $R^{10}$, $R^{11}$ et $R^{12}$) est un radical $C_1$-$C_8$ alkoxycarbonyle et tous les autres représentent un atome d'hydrogène ; et/ou
- $R^{13}$, représente un radical $-CH_2-$ ou un atome d'oxygène.

La chaîne principale du polymère de formule (I) comprend donc un, deux ou trois motifs de répétition :

- un premier motif de répétition répété p1 + p2 fois,
- un second motif de répétition, optionnel, répété n1 + n2 fois ; et
- un troisième motif de répétition, optionnel, répété m fois.

Il est entendu que, lorsque ladite chaîne principale comprend au moins 2 motifs de répétition, la répartition desdits motifs sur ladite chaîne principale est statistique, et que le polymère de formule (I) est donc un polymère statistique.

Ainsi qu'il apparaît ci-dessus, les groupements terminaux $F^1$ et $F^2$ sont généralement symétriques par rapport à la chaîne principale, c'est-à-dire qu'ils se correspondent sensiblement, à l'exception des indices g1 et g2, et d1 et d2.

Par « hétérocycle », on entend un cycle hydrocarboné pouvant comprendre un autre atome que le carbone dans la chaîne du cycle, tel que par exemple les atomes d'oxygène, de soufre ou d'azote.

Par « groupement terminal », on entend un groupement situé à l'une des 2 extrémités de la chaîne principale du polymère, laquelle est constituée par un ou plusieurs motifs de répétition.

L'indice de polymolécularité (également dénommé en anglais polydispersity index ou PDI) est défini comme le rapport Mw / Mn, c'est-à-dire le rapport de la masse moléculaire moyenne en poids à la masse moléculaire moyenne en nombre du polymère.

Dans le présent texte, les deux masses moléculaires moyennes Mn et Mw sont mesurées par chromatographie d'exclusion stérique (ou SEC, acronyme de « Size Exclusion Chromatography » en anglais) qui est également désignée par les termes de chromatographie par perméation de gel (ou par le sigle anglais correspondant GPC). L'étalonnage mis en oeuvre est usuellement un étalonnage PEG (PolyEthylèneGlycol) ou PS (PolyStyrène), de préférence PS.

Si g1 = 0 ou d1 = 0, alors il n'y a pas de radical $-(CH_2)-$ dans les radicaux de formule (IIa) ou (IIb). En d'autres termes, le radical : $-(CH_2)_{g1}-$ ou $-(CH_2)_{d1}-$ est remplacé par une simple liaison.

Lorsque un des indices n1, n2, m, x ou y qui s'applique à un ensemble de deux crochets est égal à zéro, cela signifie qu'il n'y a pas de groupe entre les crochets auxquels cet indice s'applique. Ainsi par exemple le groupement :

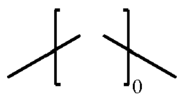

représente une simple liaison : ——— , et le groupement :

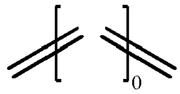

représente une double liaison : .

Les polymères de formule (I) selon l'invention sont particulièrement homogènes et stables en température.

Ils peuvent former, après une réaction de polyaddition à une température inférieure à 100°C, voire à température ambiante, avec au moins un composé aminé comprenant au moins deux groupements amines, comme une polyamine primaire et/ou secondaire, un poly(thio)uréthane constitutif d'un joint adhésif.

Le joint adhésif ainsi formé présente des valeurs de cohésion élevées, en particulier supérieures à 1,5 MPa. De telles valeurs de cohésion permettent une utilisation dudit polymère comme adhésif, par exemple comme joint d'étanchéité sur un support usuel (béton, verre, marbre), dans le domaine du bâtiment, ou encore pour le collage de vitrages dans l'industrie automobile et navale.

Les polymères de formule (I) selon l'invention peuvent être, à température ambiante (i.e. environ 20 °C), des solides, des liquides visqueux ou des liquides très fluides.

Quand le polymère selon l'invention est solide à température ambiante, il est thermoplastique, c'est-à-dire déformable et fusible à chaud (i.e. à une température supérieure à la température ambiante). Il peut donc être utilisé, en combinaison avec par exemple une diamine, en tant qu'adhésif thermofusible bicomposant et appliqué à chaud sur l'interface de substrats à assembler au niveau de leur surface de tangence. Par solidification à température ambiante, un joint adhésif solidarisant les substrats et constitué d'un poly(thio)uréthane est ainsi rapidement créé, donnant alors à l'adhésif des propriétés avantageuses de temps de prise réduit.

Selon une première alternative d'une variante préférée du polymère selon l'invention, lorsque m est non nul et que n1 et n2 sont chacun égal à 0 (correspondant à la présence dans la chaîne principale du polymère des 2 seuls motifs de répétition répétés respectivement p1 + p2 fois et m fois), alors le rapport :

$$m / (p1 + p2 + m)$$

est compris dans l'intervalle allant de 30 à 70 %, et, de façon davantage préférée, est égal à environ 50 %.

Selon une deuxième alternative de cette même variante préférée, lorsque m est égal à 0 et que la somme n1 + n2 est non nulle (correspondant à la présence dans la chaîne principale du polymère des 2 seuls motifs de répétition répétés respectivement p1 + p2 fois et n1 + n2 fois), alors au moins un des groupes $R^1$, $R^2$, $R^3$, $R^4$, $R^5$, $R^6$, $R^7$ et $R^8$ est autre qu'un atome d'hydrogène, et le rapport :

$$(n1 + n2) / (p1 + p2 + n1 + n2)$$

est compris dans l'intervalle allant de 30 à 70 %, et, de façon davantage préférée, est égal à environ 50 %.

Selon une troisième alternative de ladite variante préférée, lorsque m est non nul, que la somme n1 + n2 est non nulle (correspondant à la présence dans la chaîne principale du polymère des 3 motifs de répétition) et que chacun des groupes $R^1$, $R^2$, $R^3$, $R^4$, $R^5$, $R^6$, $R^7$ et $R^8$ est un atome d'hydrogène, alors le rapport :

$$m / ( p1 + p2 + n1 + n2 + m)$$

est compris dans l'intervalle allant de 30 à 70 %, et, de façon davantage préférée, est égal à environ 50 %.

Selon une quatrième alternative de ladite variante préférée, lorsque m est non nul, que la somme n1 + n2 est non nulle (correspondant à la présence dans la chaîne principale du polymère des 3 motifs de répétition) et que au moins un des groupes $R^1$, $R^2$, $R^3$, $R^4$, $R^5$, $R^6$, $R^7$ et $R^8$ est autre qu'un atome d'hydrogène, alors le rapport :

$$(m + n1 + n2) / ( p1 + p2 + n1 + n2 + m)$$

est compris dans l'intervalle allant de 30 à 70 %, et, de façon davantage préférée, est égal à environ 50 %.

Conformément aux 4 alternatives de ladite variante préférée, le polymère de formule (I) se présente généralement sous la forme de liquide visqueux, présentant généralement une viscosité Brookfield à 23°C comprise entre 1 mPa.s et 500 Pa.s, de préférence entre 1 à 150 Pa.s et encore plus préférentiellement de 1 à 50 Pa.s. Il est alors

avantageusement facile à mettre en oeuvre et peut être combiné à un constituant supplémentaire tel qu'une résine tackifiante ou une charge, pour former une composition adhésive.

De manière générale, la viscosité peut être mesurée de manière bien connue de l'homme du métier. En particulier, la viscosité peut être mesurée avec un viscosimètre Brookfield, en choisissant l'aiguille et la vitesse du module de manière appropriée en fonction de la gamme de viscosité à mesurer.

Selon un mode de réalisation de l'invention, toutes les liaisons ====== de la formule (I) sont des doubles liaisons carbone-carbone, et la formule (I) devient alors la formule (I') suivante :

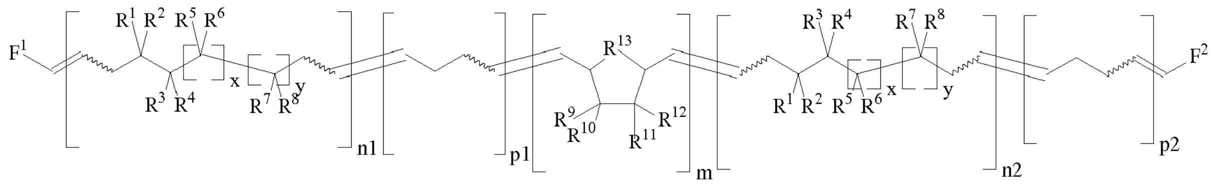

(I')

dans laquelle x, y, n1, n2, m, p1, p2, $F^1$, $F^2$, $R^1$, $R^2$, $R^3$, $R^4$, $R^5$, $R^6$, $R^7$, $R^8$, $R^9$, $R^{10}$, $R^{11}$, $R^{12}$ et $R^{13}$ ont les significations données précédemment et la liaison ~~~~ est une liaison orientée géométriquement d'un côté ou de l'autre par rapport à la double liaison (cis ou trans).

Chacune des doubles liaisons du polymère de formule (I') est orientée géométriquement cis ou trans, de préférence est d'orientation cis. Les isomères géométriques du polymère de formule (I') sont généralement présents en proportions variables, avec le plus souvent une majorité de doubles liaisons orientées cis (Z), et préférentiellement toutes orientées cis (Z). Il est aussi possible selon l'invention d'obtenir un seul des isomères géométriques, selon les conditions réactionnelles et en particulier selon la nature du catalyseur utilisé.

Selon un autre mode de réalisation de l'invention, toutes les liaisons====== de la formule (I) sont des liaisons simples carbone-carbone, et la formule (I) devient alors la formule (IH) ci-dessous :

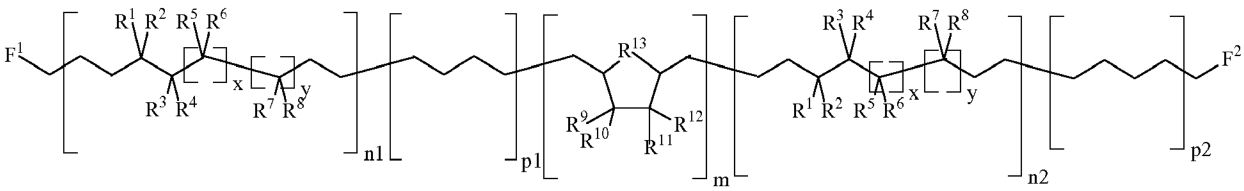

(IH)

dans laquelle x, y, n1, n2, m, p1, p2, $F^1$, $F^2$, $R^1$, $R^2$, $R^3$, $R^4$, $R^5$, $R^6$, $R^7$, $R^8$, $R^9$, $R^{10}$, $R^{11}$, $R^{12}$ et $R^{13}$ ont les significations données précédemment.

La formule (IH) illustre le cas où la chaîne principale du polymère de formule (I) est saturée, c'est-à-dire ne comporte que des liaisons saturées.

Dans ce cas, de façon préférée, x est égal à 1 et y est égal à 1.

Selon un mode de réalisation du polymère de formule (I) selon l'invention, m est égal à 0, le polymère étant de formule (II) suivante :

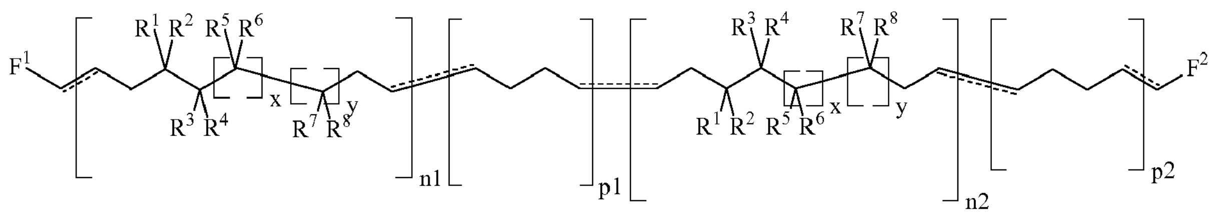

(II)

dans laquelle x, y, n1, n2, p1, p2, $F^1$, $F^2$, $R^1$, $R^2$, $R^3$, $R^4$, $R^5$, $R^6$, $R^7$ et $R^8$, ont les significations données précédemment.

De façon particulièrement préférée, x est égal à 1 et y est égal à 1.

Selon une forme particulièrement préférée de ce mode de réalisation, toutes les liaisons ====== de la formule (II) sont des doubles liaisons carbone-carbone, et la formule (II) devient alors la formule (II') suivante :

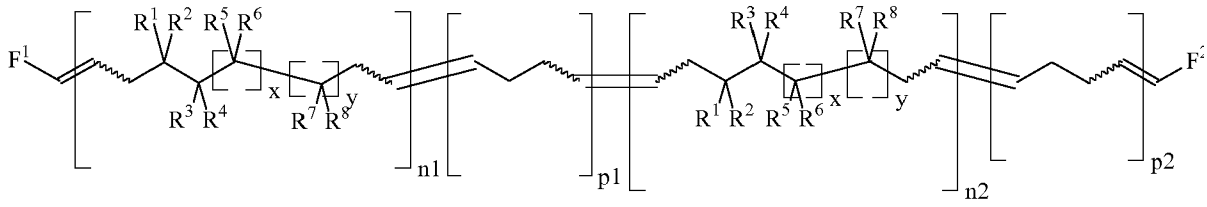

(II')

Les formules (II) et (II') illustrent le cas où la chaîne principale du polymère de formule (1) comprend seulement deux motifs de répétition, répétés respectivement n1 + n2 et p1+p2 fois.

Selon un autre mode de réalisation du polymère de formule (I) selon l'invention, n1 et n2 sont chacun égal à 0, le polymère étant de formule (III) suivante :

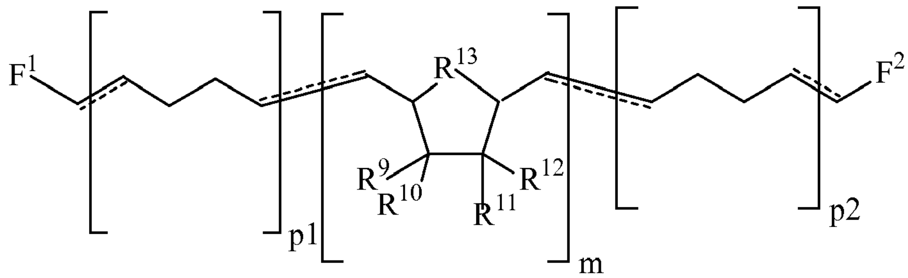

(III)

dans laquelle m, p1, p2 $F^1$, $F^2$, $R^9$, $R^{10}$, $R^{11}$, $R^{12}$ et $R^{13}$ ont les significations données précédemment.

Selon une forme particulièrement préférée de ce mode de réalisation, toutes les liaisons de la formule (III) sont des doubles liaisons carbone-carbone, et la formule (III) devient alors la formule (III') suivante :

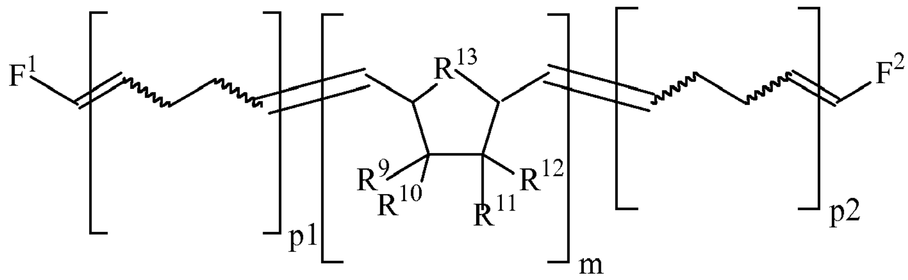

(III')

Les formules (III) et (III') illustrent des cas où la chaîne principale du polymère de formule (I) comprend seulement deux motifs de répétition, répétés respectivement (p1 + p2) fois et m fois.

Selon encore un autre mode de réalisation du polymère de formule (I) selon l'invention, n1, n2 et m sont chacun égal à 0, le polymère étant de formule (IV) suivante :

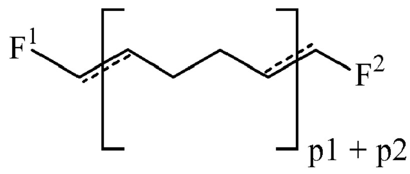

(IV)

dans laquelle p1, p2, $F^1$, $F^2$ ont les significations données précédemment.

Selon une forme particulièrement préférée de ce mode de réalisation, toutes les liaisons de la formule (IV) sont des doubles liaisons carbone-carbone, et la formule (IV) devient alors la formule (IV') suivante :

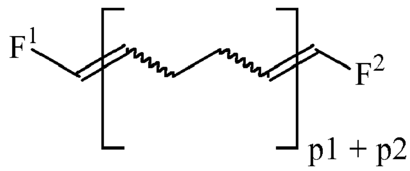

(IV')

Les formules (IV) et (IV') illustrent le cas où la chaîne principale du polymère de formule (I) comprend un seul motif de répétition, répété p1 + p2 fois.

S'agissant des groupements terminaux dithiocyclocarbonate du polymère selon l'invention, de préférence :

- le radical A, qui est compris dans la définition des radicaux de formules (IIa), (IIb), (II'a) et (II"b), représente un radical méthylène ; et/ou
- Z, qui est compris dans la définition des radicaux de formules (IIa) et (IIb), est tel que le groupe divalent -A-Z- est le groupe -A-OC(=O)- et le groupe divalent - Z-A- est le groupe -C(=O)O-A-.

S'agissant, plus particulièrement, des radicaux de formule (IIa) et (IIb), de préférence g1 égale 0 ou d1 égale 0, et de façon encore plus préférée :

g1=d1=0.

Dans ce dernier cas, $F^1$ et $F^2$ sont avantageusement les radicaux de formule respective :

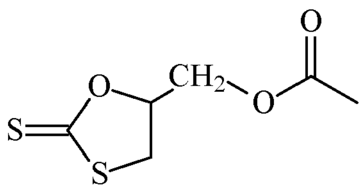

et

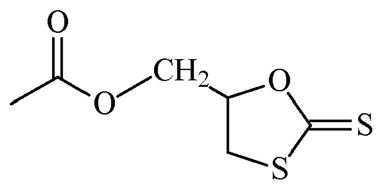

S'agissant, plus particulièrement, des radicaux de formule (II'a) et (II'b), de préférence g2 égale 1 ou d2 égale 1, et de façon encore plus préférée :

g2=d2=1.

Dans ce dernier cas, $F^1$ et $F^2$ sont avantageusement les radicaux de formule respective:

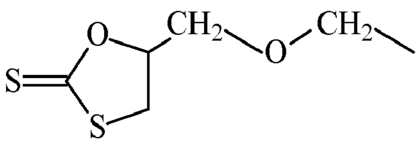

et

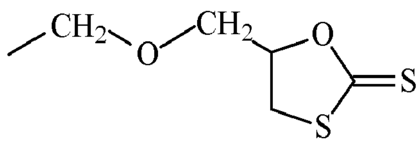

L'invention concerne encore un procédé de préparation d'un polymère hydrocarboné comprenant deux groupements terminaux dithiocyclocarbonate de formule (I) selon l'invention, ledit procédé comprenant au moins :

(i) une étape de polymérisation par ouverture de cycle par métathèse (également dénommée « Ring-Opening Metathesis Polymerization» ou ROMP en anglais), en présence :

(a) d'un catalyseur de métathèse ;
(b) d'un agent de transfert de chaîne (désigné également ci-après par CTA pour « Chain Transfer Agent » en anglais) qui est :

- lorsque $F^1$ et $F^2$ sont les radicaux monovalents de formules respectives (IIa) et (IIb) : un composé mono ou di-époxydé de formules respectives (E1) et (E2) :

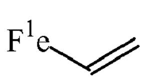
(E1)
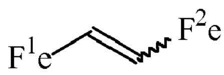
(E2)

où $F^1e$ et $F^2e$ sont les radicaux monovalents de formules respectives (IIea) et (IIeb) :

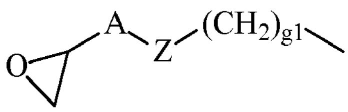
(IIea)
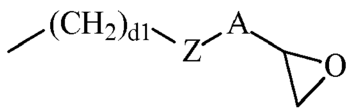
(IIeb)

; et

- lorsque $F^1$ et $F^2$ sont les radicaux monovalents de formule respective (II'a) et (II'b) : un composé di-époxydé de formule (E'2) :

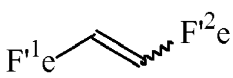
(E'2)

où $F'^1e$ et $F'^2e$ sont les radicaux monovalents de formule respective (II'ea) et (II'eb) :

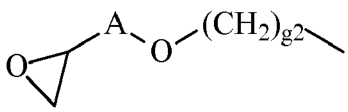
(II'ea)
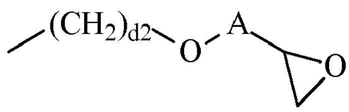
(II'eb)

étant entendu que dans les formules ci-dessus :

- la liaison  est une liaison simple carbone-carbone orientée géométriquement d'un côté ou de l'autre par rapport à la double liaison (cis ou trans) ;
- A, Z, g1, d1; g2 et d2 sont tels que définis précédemment ;

(c) d'un composé de formule (C) :

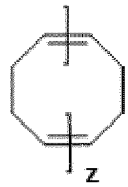

(C)

dans laquelle z est tel que défini précédemment ; et
(d) éventuellement d'un composé de formule (D) :

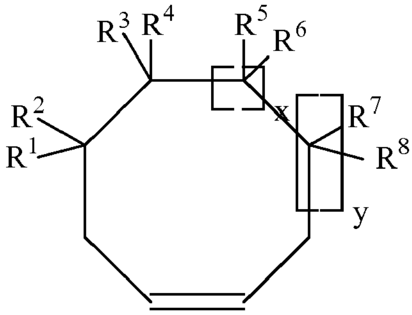

(D)

dans laquelle $R^1$, $R^2$, $R^3$, $R^4$, $R^5$, $R^6$, $R^7$, $R^8$, x et y sont tels que définis précédemment ; et
(e) éventuellement d'un composé de formule (E) :

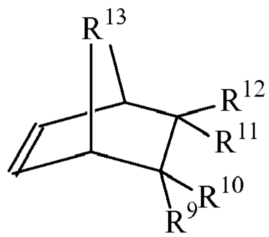

(E)

dans laquelle $R^9$, $R^{10}$, $R^{11}$, $R^{12}$ et $R^{13}$ sont tels que définis précédemment ;
ladite étape de polymérisation conduisant à la formation d'un polymère à groupes époxydes terminaux de formule (V) :

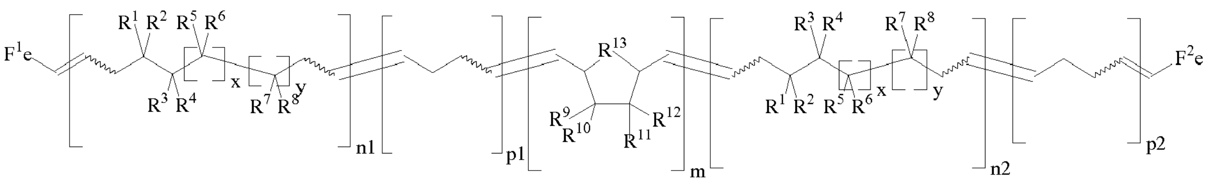

ou (V'):

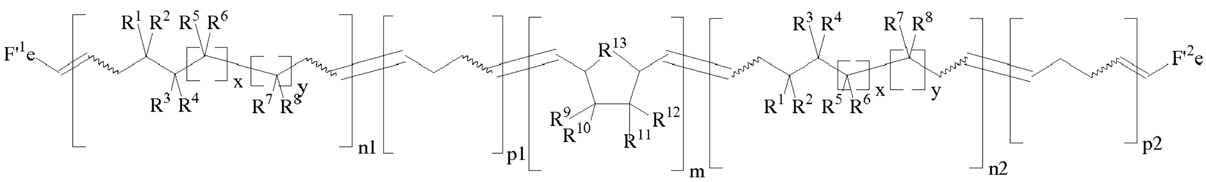

dans lesquelles $F^1e$, $F^2e$, $F'^1e$ et $F'^2e$ sont tels que définis précédemment et, dans le cas où le CTA de formule (E1) est mis en oeuvre : $F^1e = F^2e$ ;

ladite étape de polymérisation étant en outre mise en oeuvre ;

- pendant une durée allant de 2 à 24 heures et à une température comprise dans un intervalle de 20 à 60 °C ; et
- avec un rapport r égal au rapport du nombre de moles dudit CTA :
- au nombre de moles du composé de formule (C), si celui-ci est le seul réactif autre que le CTA mis en oeuvre dans la réaction, ou
- à la somme du nombre de moles du composé de formule (C) et du nombre de moles des composés de formule (D) et/ou (E), si les composés de formule (D) et/ou (E) sont également mis en oeuvre dans la réaction,

compris dans un intervalle allant de 0,0010 à 1,0 ; puis

(ii) une étape de dithiocarbonation du polymère de formule (V) ou (V') obtenu à l'étape précédente, par réaction avec du disulfure de carbone ($CS_2$) en présence d'un composé halogéné du lithium, tel que le bromure de lithium, à une température allant de 10 à 45°C, jusqu'à obtention du polymère hydrocarboné comprenant deux groupements terminaux dithiocyclocarbonate selon l'invention.

Lorsque le polymère hydrocarboné comprenant deux groupements terminaux dithiocyclocarbonate selon l'invention possède une chaine principale saturée, tel qu'envisagé par la formule (1H) définie précédemment, le procédé de préparation ci-dessus comprend entre les étapes (i) et (ii), une étape d'hydrogénation sélective des doubles liaisons du polymère issu de l'étape (i) possédant deux groupements époxy terminaux de formule (V) ou (V'). Cette hydrogénation sélective peut être réalisée selon le procédé décrit dans la demande WO 9,535,290 de EASTMAN CHEMICAL.

Dans la définition de l'étape de polymérisation donnée ci-dessus, il est bien entendu que l'article indéfini "un", en tant qu'il se rapporte à un réactif ou au catalyseur mis en oeuvre ou bien au produit formé, doit s'interpréter comme signifiant "au moins un", c'est-à-dire "un ou plusieurs".

La durée et la température de la réaction dépendent généralement de ses conditions de mise en oeuvre notamment de la nature du solvant utilisé, et en particulier du taux de charge catalytique. L'homme du métier est à même de les adapter en fonction des circonstances.

Ainsi, de préférence, la durée de la réaction de polymérisation va de 2 à 10 heures, et le rapport r défini ci-dessus est compris dans un intervalle allant de 0,0020 à 0,5.

La polymérisation par ouverture de cycle par métathèse est une réaction bien connue de l'homme du métier, qui est mise en oeuvre ici en présence d'un composé CTA particulier de formule (E1, (E2) ou (E'2).

**(a) Catalyseur de métathèse :**

Le catalyseur de métathèse est, de préférence, un catalyseur comprenant du ruthénium, et de façon encore plus préférée un catalyseur de Grubbs,

Un tel catalyseur est généralement un produit du commerce.

Le catalyseur de métathèse est le plus souvent un catalyseur de métal de transition dont notamment un catalyseur comprenant du ruthénium le plus souvent sous forme de complexe(s) du ruthénium tel qu'un complexe ruthénium-carbène.

Par catalyseur de Grubbs, on entend généralement selon l'invention un catalyseur de Grubbs de 1ère ou 2ème génération, mais aussi tout autre catalyseur de type Grubbs (de type ruthénium-carbène) ou Hoveyda-Grubbs accessible à l'homme du métier, tel que par exemple les catalyseurs de Grubbs substitués décrits dans le brevet US 5,849,851.

Un catalyseur de Grubbs 1ère génération est généralement de formule (G1) :

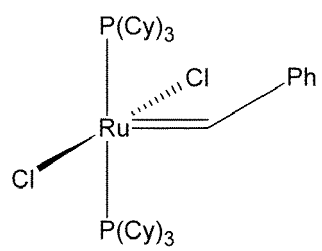

(G1)

dans laquelle Ph est le phényle, Cy est le cyclohexyle, et le groupe $P(Cy)_3$ est un groupe tricyclohexylphosphine.

La dénomination IUPAC de ce composé est : benzylidène-bis(tricyclohexylphosphine) dichlororuthénium (de numéro CAS 172222-30-9). Un tel catalyseur est disponible notamment auprès de la société Aldrich.

Un catalyseur de Grubbs 2ème génération (ou G2) est généralement de formule (G2) :

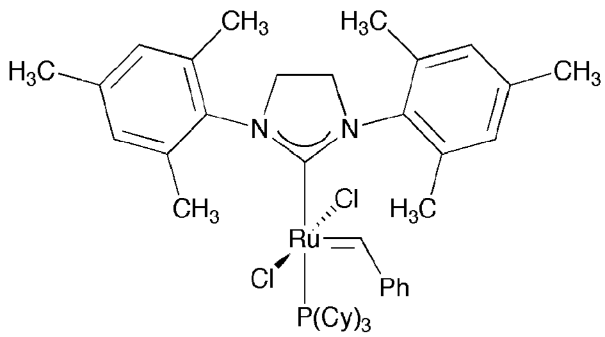

(G2)

dans laquelle Ph est le phényle et Cy est le cyclohexyle.
La dénomination IUPAC de la deuxième génération de ce catalyseur est benzylidène [1,3-bis(2,4,6-triméthylphényl)-2-imidazolidinylidène] dichloro(tricyclohexylphosphine) ruthénium (de numéro CAS 246047-72-3). Ce catalyseur est également disponible auprès de la société Aldrich.

**(b) CTA de formule (E1), (E2) ou (E'2) :**

**(b1) Mise en oeuvre d'un CTA de formule (E1) ou (E2) pour la préparation du polymère de formule (I) selon l'invention dans laquelle $F^1$ et $F^2$ sont les radicaux monovalents de formules respectives (IIa) et (IIb) :**

Dans ce cas en effet, la réaction de polymérisation par ouverture de cycle par métathèse est mise en oeuvre en présence d'un CTA mono-fonctionnel de formule (E1) ou d'un CTA difonctionnel de formule (E2).

Le CTA de formule (E1) est dit monofonctionnel car il comporte un seul groupement époxydé. Le CTA de formule (E2) est dit difonctionnel car il comporte deux groupements époxydés, pouvant être identiques ou différents.

Selon un premier mode de réalisation du procédé (b1) (appelé « voie CTA monofonctionnel »), le CTA utilisé est de formule (E1).

Selon une première variante du procédé de préparation selon ladite voie CTA monofonctionnel, le CTA de formule (E1) correspond à la formule (E1 a) suivante:

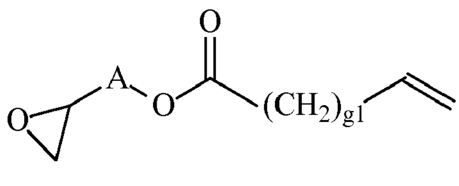

(E1a)

Le composé de formule (E1a) peut être obtenu selon le schéma (1) ci-dessous, et en suivant le mode opératoire décrit dans la demande de brevet CN 102,757,409 :

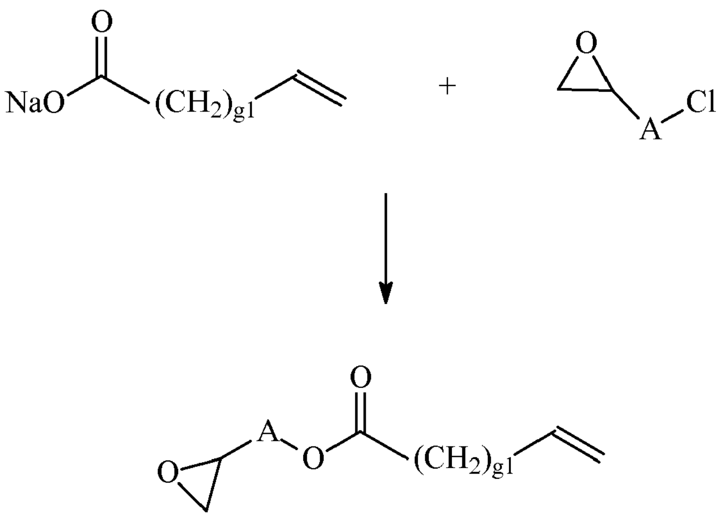

(E1a)

Schéma (1)

On peut citer comme exemple particulièrement avantageux de CTA de formule (E1a), l'acrylate de glycidyle de formule :

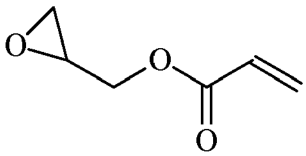

qui est désigné simplement par la suite par la dénomination CTA$^1$.

Selon une deuxième variante du procédé de préparation selon ladite voie CTA monofonctionnel, le CTA de formule (E1) correspond à la formule (E1 b) suivante:

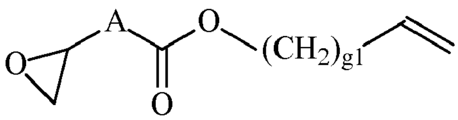

(E1b)

Le composé de formule (E1 b) peut être obtenu par transestérification selon le schéma (2) ci-dessous, dans lequel Me désigne le groupe méthyle, et en suivant l'un des modes opératoires décrits dans la publication intitulée « Kinetics of Epoxidation of Alkyl Esters of Undecylenic Acid : Comparison of Traditional Routes vs. Ishii-Venturello Chemistry » de G.D. Yadav et D.V. Satoskar (JAOCS, Vol.74, no.4 (1997), pages 397-407), notamment ceux décrits aux tableaux 9 et 10 :

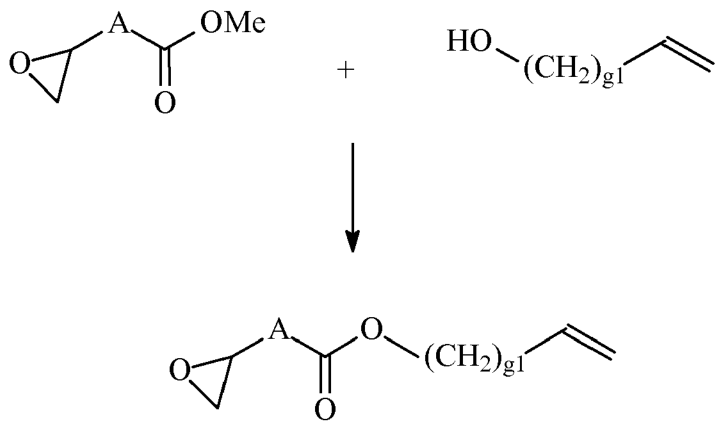

(E1b)

Schéma (2)

Les époxy-alcanoates utilisés dans cette réaction peuvent être synthétisés en suivant les modes opératoires décrits dans les demandes de brevet US 3,448,125 de ROHM & HAAS et EP 0,208,272 de MONTEDISON.

Selon un deuxième mode de réalisation du procédé (b1) (appelé « voie CTA difonctionnel »), le CTA utilisé est de formule (E2).

Selon une première variante du procédé de préparation selon ladite voie CTA difonctionnel, le CTA de formule (E2) correspond à la formule (E2a) suivante :

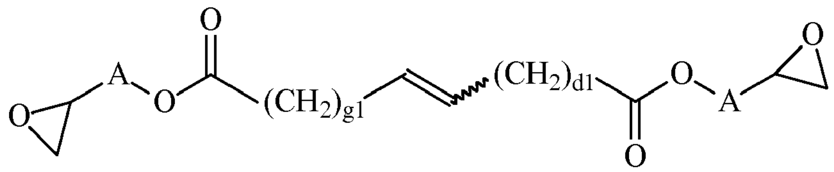

(E2a)

Le composé de formule (E2a) peut être obtenu selon le schéma (3) ci-dessous, correspondant à une variante originale du schéma (1).

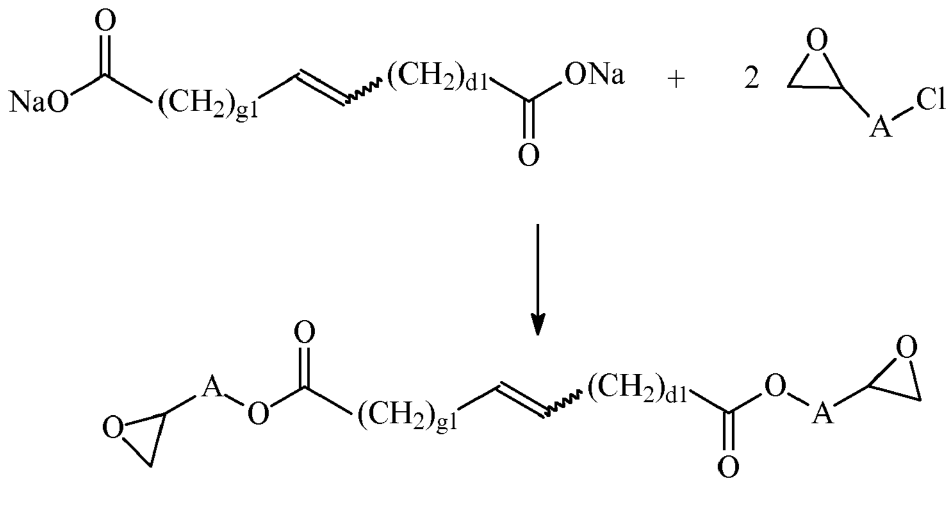

(E2a)

Schéma (3)

On peut citer comme exemple particulièrement avantageux de CTA de formule (E2a) le fumarate de glycidyle (ou le maléate de glycidyle, isomère cis correspondant) de formule :

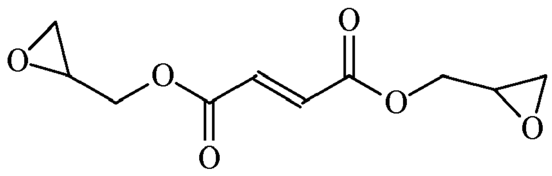

qui est désigné simplement par la suite par la dénomination $CTA^2$.

Selon une deuxième variante du procédé de préparation selon ladite voie CTA difonctionnel, le CTA de formule (E2) correspond à la formule (E2b) suivante :

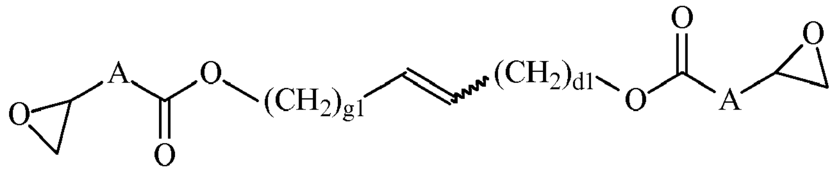

(E2b)

Le composé de formule (E2b) peut être obtenu selon le schéma (4) ci-dessous, correspondant à une variante originale du schéma (2) dans lequel Me désigne également le groupe méthyle:

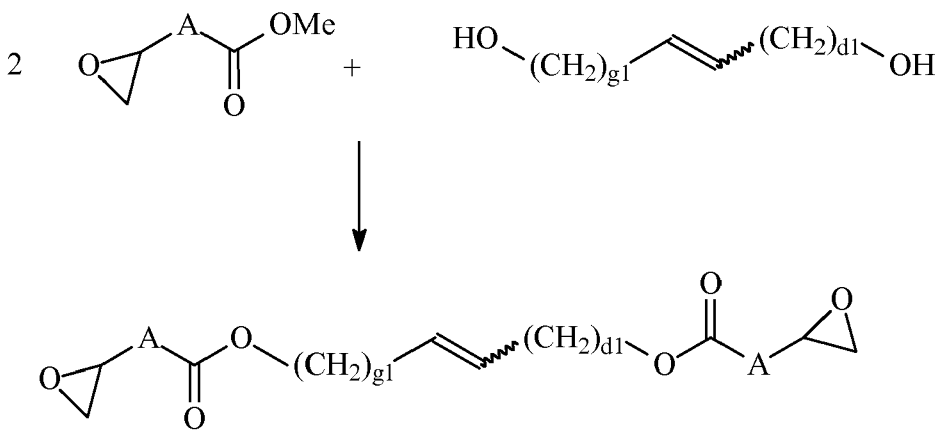

(E2b)

Schéma (4)

**(b2) Mise en oeuvre d'un CTA de formule (E'2) pour la préparation du Polymère de formule (I) selon l'invention dans laquelle $F^1$ et $F^2$ sont les radicaux monovalents de formules respectives (II'a) et (II'b) :**

Dans ce cas en effet, la réaction de polymérisation par ouverture de cycle par métathèse est mise en oeuvre en présence du CTA difonctionnel de formule (E'2):

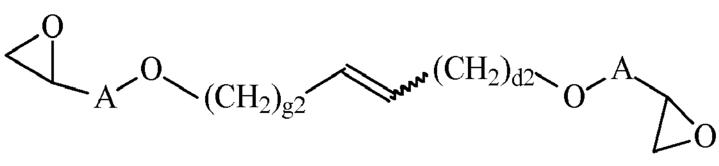

(E'2)

Le composé de formule (E'2) peut être obtenu selon le schéma (5) ci-dessous, et en suivant le mode opératoire avec une catalyse par transfert de phase décrit dans la demande de brevet EP 0,911,326 :

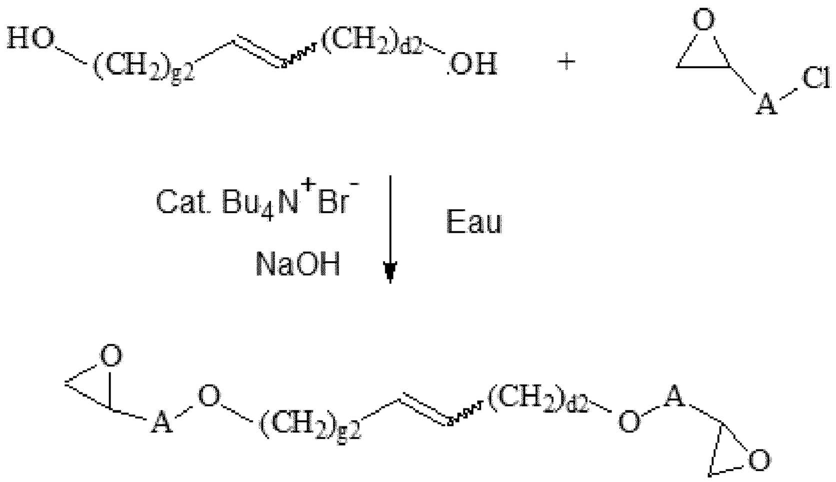


(E'2)

Schéma (5)

On peut citer comme exemple particulièrement avantageux de CTA de formule (E'2) le diglycidyl éther du 2-Butène-1,4-diol de formule :

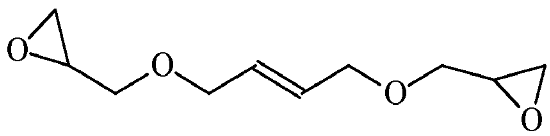

qui est désigné simplement par la suite par la dénomination CTA'[2].

**(c) composé de formule (C) :**

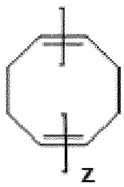

(C)

Le composé cyclique de formule (C) comprend généralement de 8 à 32 atomes de carbones.

De préférence, il est choisi dans le groupe formé par :

- le 1,5-cyclooctadiène (désigné ci-après par COD) de formule :

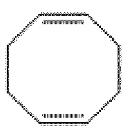

(correspondant à z =1)

- et le 1,5,9-cyclododecatriène (désigné ci-après par CDT) composé à 12 atomes de carbone de formule :

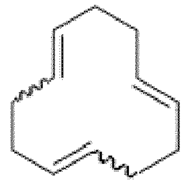

(correspondant à z =2)

ces 2 composés étant disponibles commercialement auprès des sociétés Evonik Degussa et Arkema France.

**(d) composé de formule (D) :**

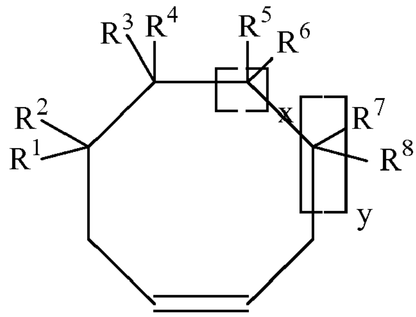

(D)

Le composé de formule (D) comprend généralement de 6 à 30, de préférence de 6 à 22, atomes de carbone.

De préférence :

- $R^1$, $R^2$, $R^3$, $R^4$, $R^5$, $R^6$, $R^7$ et $R^8$ représentent un atome d'hydrogène ou un radical alkyle comprenant de 1 à 14 atomes de carbone, et encore plus préférentiellement de 1 à 8 ;
- les nombres entiers x et y sont compris dans une fourchette allant de 0 à 2, la somme x + y étant comprise dans une fourchette allant de de 0 à 2.

Selon une variante encore davantage préférée :

- x est égal à 1 et y est égal à 1 et/ou
- au plus un des groupes pris parmi ($R^1$, $R^2$, $R^3$, $R^4$, $R^5$, $R^6$, $R^7$ et $R^8$) est un radical $C_1$-$C_8$ alkyle et tous les autres représentent un atome d'hydrogène.

Le composé de formule (D) est notamment choisi parmi :

- le cycloheptène, le cyclooctène, le cyclononène, le cyclodécène, le cycloundécène et le cyclododécène.
- le 5-époxy-cyclooctène, de formule :

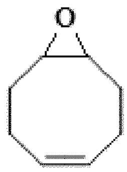

(disponible chez Aldrich),
- le 5-oxocyclooctène, de formule :

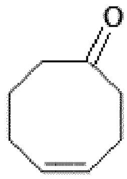

ou encore parmi un 5-alkyl-cyclooctène, de formule :

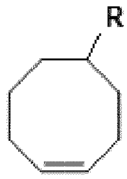

dans laquelle R est un radical alkyle comprenant de 1 à 22 atomes de carbone, de préférence 1 à 14 ; R étant par exemple le radical *n*-hexyle.

Les composés correspondant aux 2 dernières formules développées ci-dessus peuvent être préparés par un procédé généralisant le schéma réactionnel de l'exemple 8, notamment en réalisant l'alkylation de l'intermédiaire 2 par un réactif de Grignard approprié.
Parmi ces composés, sont tout particulièrement préférés le cyclooctène et le 5-n-hexyl-cyclooctène.

**(e) composé de formule (E) :**

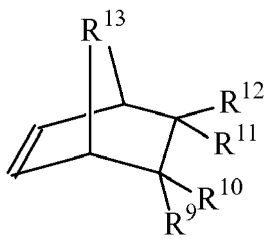

(E)

Le composé de formule (E) comprend généralement de 6 à 30, de préférence de 6 à 22, atomes de carbone.
De préférence :

- $R^9$, $R^{10}$, $R^{11}$ et $R^{12}$ représentent un atome d'hydrogène ou un radical alkyle ou alkoxycarbonyle comprenant de 1 à 14 atomes de carbone, et encore plus préférentiellement de 1 à 8 ;
- le radical $R^0$, compris dans le groupe $-NR^0$ qui est l'une des significations de $R^{13}$, est un radical linéaire comprenant de 1 à 14 atomes de carbone.

Selon une variante encore davantage préférée :

- au plus un des groupes pris parmi ($R^9$, $R^{10}$, $R^{11}$ et $R^{12}$) est un radical $C_1$-$C_8$ alkoxycarbonyle et tous les autres représentent un atome d'hydrogène ; et/ou
- $R^{13}$, représente un radical $-CH_2-$ ou un atome d'oxygène.

Le composé de formule (E) est notamment choisi parmi :

- le norbornène, de formule suivante :

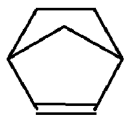

- le norbornadiène, de formule suivante:

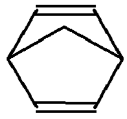

- le dicyclopentadiène, de formule suivante:

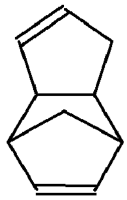

- le 7-oxanorbornène, de formule suivante:

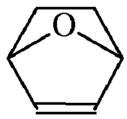

- le 7-oxanorbornadiène, de formule suivante:

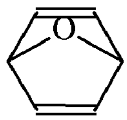

- le 5-éthylidène-2-norbornène, de formule suivante:

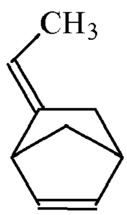

- ou encore, le 5-norbonene-2-methylacetate, de formule suivante:

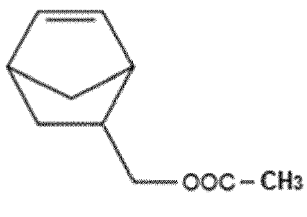

Le composé de formule (E) peut également être choisi parmi les composés de formules suivantes :

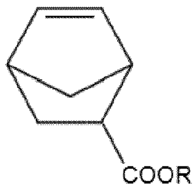
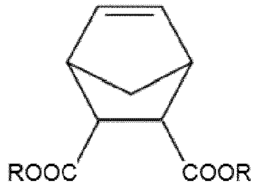
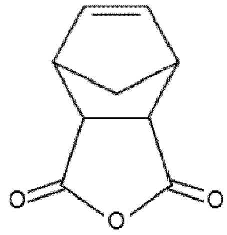
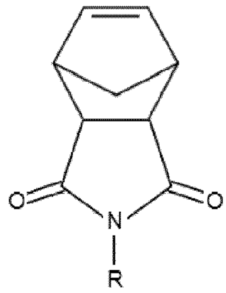

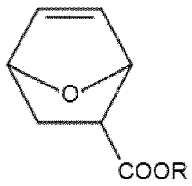
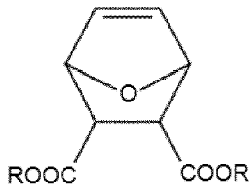
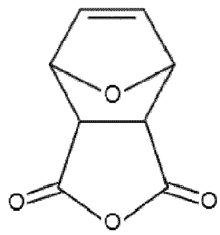
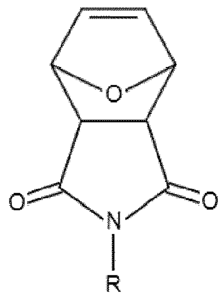

dans lesquelles R est tel que défini précédemment pour le composé de formule (D).

Le composé de formule (E) peut également être choisi dans le groupe formé par les produits d'addition (ou adducts en anglais) issus de la réaction de Diels-Alder utilisant le cyclopentadiène ou le furane comme produit de départ, ainsi que les composés dérivés du norbornène tels les norbornènes branchés tels que décrits dans WO 2001/04173 (tels que : carboxylate d'isobornyl norbornène, carboxylate de phényl norbornène, carboxylate d'éthylhéxyle norbornène, carboxylate de phénoxyéthyle norbornène et alkyl dicarboxymide norbornène, l'alkyl comportant le plus souvent de 3 à 8 atomes de carbone) et les norbornènes branchés tels que décrits dans WO 2011/038057 (anhydrides dicarboxyliques de norbornène et éventuellement anhydrides dicarboxyliques de 7-oxanorbornène).

Parmi les différents composés de formule (E) cités, sont tout particulièrement préférés le norbornène, le 7-oxanorbornène, le 5-norbornene-2-carboxylate de méthyle, de formule :

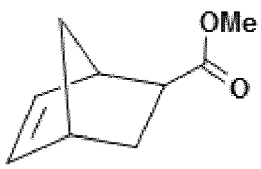

le 5-oxanorbornene-2-carboxylate de méthyle, de formule :

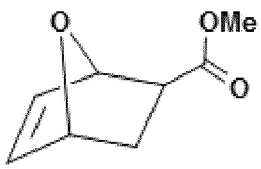

ou encore le dicyclopentadiène.

L'étape (i) de polymérisation par ouverture de cycle par métathèse est mise en oeuvre le plus souvent en présence d'au moins un solvant, généralement choisi dans le groupe formé par les solvants aqueux ou organiques typiquement utilisés dans les réactions de polymérisation et qui sont inertes dans les conditions de la polymérisation sus-décrites.

L'étape (ii) de dithiocarbonation et/ou l'étape optionnelle d'hydrogénation, peuvent être mise en oeuvre dans le même solvant que l'étape (i).

En particulier, lorsque le même solvant est utilisé, le polymère hydrocarboné à terminaisons dithiocyclocarbonate selon l'invention peut être généré en mettant en oeuvre successivement l'étape (i) et l'étape (ii), sans avoir à isoler-entre les deux étapes (i) et (ii) - le polymère à terminaisons époxy de formule (V) ou (V') issu de l'étape (i).

A titre d'exemple de solvant pouvant être mis en oeuvre, on peut citer les hydrocarbures aromatiques, les hydrocarbures chlorés, les éthers, les hydrocarbures aliphatiques, les alcools, l'eau ou leurs mélanges.

De préférence, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol, l'eau ou leurs mélanges.

Plus préférentiellement, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol, et leurs mélanges.

Mieux encore, le solvant est le toluène, l'heptane, ou un mélange de toluène et de chlorure de méthylène. La solubilité du polymère formé au cours de la réaction de polymérisation dépend généralement et principalement du choix du solvant et de la masse molaire du polymère obtenu. Il est aussi possible que la réaction soit mise en oeuvre sans solvant.

S'agissant de l'étape (ii) de dithiocarbonation, le disulfure de carbone ($CS_2$) et le polymère à terminaisons époxy issu de l'étape (i) sont généralement utilisés en proportion stoechiométrique, c'est-à-dire que deux moles de disulfure de carbone sont mis à réagir avec une mole de polymère à terminaisons époxy issu de l'étape (i), de manière à ce que l'ensemble des fonctions époxy dudit polymère soit réagi avec du disulfure de carbone. Une légère variation par rapport aux stoechiométries données précédemment, notamment un léger défaut de $CS_2$, peut être envisagé(e) sans inconvénient. Dans ce dernier cas, il peut être envisagé de travailler par exemple avec un rapport molaire de la quantité de $CS_2$ sur la quantité de polymère à terminaisons époxy de formule (V) ou (V') issu de l'étape (i) allant de 0,96 à 1.

L'invention concerne également l'utilisation comme adhésif du polymère hydrocarboné comprenant deux groupements terminaux dithiocyclocarbonate, tel que défini précédemment, en mélange avec un composé aminé comprenant au moins deux groupements amine, par exemple choisi parmi les diamines, les triamines et homologues supérieurs.

Ledit polymère hydrocarboné réagit avec le composé aminé pour former un poly(thio)uréthane. On entend par poly(thio)uréthane un polymère comprenant au moins deux groupes (thio)uréthane (ou encore S-thiocarbamate, répondant notamment à la formule -O(C=S)-NH- ).

Les composés aminés utilisables selon l'invention sont de préférence tels que tous les groupements amines, sont des groupements amines primaires. Ces composés aminés peuvent être des oligomères. Ces oligomères ont généralement une masse molaire moyenne en nombre inférieure à 2000 g/mol.

La température à laquelle le polymère à groupements terminaux dithiocyclocarbonate peut être mis en oeuvre, comme adhésif, en mélange avec le composé aminé est une température inférieure à 100 °C, voire à température ambiante (c'est-à-dire environ 23 °C) lorsque ledit polymère est liquide à 23°C.

Il a été observé que dans des conditions de températures identiques, et en présence du même composé aminé, la réaction de formation du poly(thio)uréthane constitutif du joint adhésif est plus rapide que celle associée à la mise en oeuvre comme adhésif du polymère hydrocarboné à terminaisons (2-oxo-1,3-dioxolan-4-yl) selon la demande WO 2014/091173.

Les quantités du polymère hydrocarboné et du composé aminé correspondent à des quantités stoechiométriques, c'est-à-dire que le rapport molaire du nombre de groupes azlactones sur le nombre de groupes amines va de 0,8 à 1,2, de préférence de 0,9 à 1,1, voire est d'environ 1,0.

En pratique le polymère hydrocarboné et le composé aminé, utilisé comme durcisseur, sont avantageusement compris chacun dans un composant d'une composition bi-composants qui est mise à la disposition de l'utilisateur. Ce dernier procède ainsi, au moment de l'emploi de l'adhésif, au mélange de ces 2 composants, éventuellement à chaud, de manière à obtenir une composition adhésive liquide.

L'invention concerne encore un procédé d'assemblage de deux substrats par collage, comprenant :

- l'enduction sur au moins un des deux substrats à assembler d'une composition adhésive liquide obtenue par mélange d'un composé aminé comprenant au moins deux groupements amines avec le polymère hydrocarboné comprenant deux groupements terminaux dithiocyclocarbonate tel que défini précédemment ; puis
- la mise en contact effective des deux substrats.

La composition adhésive liquide est soit la composition adhésive comprenant lesdits composés et polymère à l'état liquide à température ambiante, soit la composition adhésive fondue à chaud. L'homme du métier est à même de procéder de façon à ce que la composition adhésive utilisée soit sous forme liquide au moment de son utilisation.

L'enduction de la composition adhésive liquide est, de préférence, réalisée sous la forme d'une couche d'épaisseur comprise dans une fourchette de 0,3 à 5 mm, de préférence de 1 à 3 mm, sur au moins l'une des deux surfaces qui appartiennent respectivement aux deux substrats à assembler, et qui sont destinées à être mises en contact l'une avec l'autre selon une surface de tangence. La mise en contact effective des deux substrats est alors mise en oeuvre selon leur surface de tangence.

Bien entendu, l'enduction et la mise en contact doivent être effectuées dans un intervalle de temps compatible, comme il est bien connu de l'homme du métier, c'est-à-dire avant que la couche d'adhésif appliquée sur le substrat ne perde sa capacité à fixer par collage ce substrat à un autre substrat. En général, la polycondensation du polymère hydrocarboné avec le composé aminé commence à se produire lors de l'enduction, puis continue à se produire lors de l'étape de mise en contact des deux substrats.

Les substrats appropriés sont, par exemple, des substrats inorganiques tels que le verre, les céramiques, le béton, les métaux ou les alliages (comme les alliages d'aluminium, l'acier, les métaux non-ferreux et les métaux galvanisés) ; ou bien des substrats organiques comme le bois, des plastiques comme le PVC, le polycarbonate, le PMMA, le polyéthylène, le polypropylène, les polyesters, les résines époxy ; les substrats en métal et les composites revêtus de peinture (comme dans le domaine automobile).

Les exemples suivants sont donnés à titre purement illustratif de l'invention, et ne sauraient être interprétés pour en limiter la portée.

Les exemples 1 à 15 décrivent la préparation de polymères comprenant 2 groupements terminaux dithiocyclocarbonate, mettant en oeuvre une étape de polymérisation par ouverture de cycle par métathèse.

**Exemple 1 :** synthèse d'un polymère comprenant deux groupements terminaux (2-thione-1,3-oxathiolan-4-yl)-méthylène-ester avec une étape de polymérisation du COD en présence de CTA[1]:

Etape (i) :

On utilise du 1,5-cyclooctadiène (dénommé COD) disponible commercialement et comme agent de transfert de chaîne le CTA[1] :

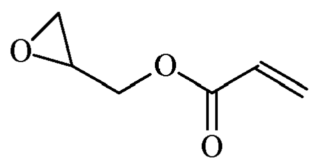

Le 1,5-cyclooctadiène (10,8 mmol), de la benzoquinone (0,54 mmol) et du $CH_2Cl_2$ sec (5 ml) sont introduits dans un ballon de 20 ml dans lequel a également été placé un barreau magnétique d'agitation revêtu de Téflon®. Le ballon et son contenu sont ensuite mis sous argon.

Le composé *CTA*[1] (0,54 mmol) est ensuite ajouté sous agitation dans le ballon par seringue. Le rapport des réactifs exprimé en nombre de moles : *CTA*[1]/COD est de 0,050.

Le ballon est alors immergé dans un bain d'huile à 40°C, puis l'on procède immédiatement à l'ajout, par une canule, du catalyseur G2 défini précédemment (5,4 $\mu$mol) en solution dans du $CH_2Cl_2$ (2 ml).

Le mélange réactionnel devient très visqueux en l'espace de 2 minutes. La viscosité décroit ensuite lentement pendant les 10 minutes suivantes.

Au bout de 8 heures à compter de l'addition du catalyseur, le produit présent dans le ballon est extrait après évaporation du solvant sous vide. Le produit est alors récupéré sous la forme de poudre solide incolore, après précipitation dans le méthanol, filtration et séchage à 20 °C sous vide, avec un rendement supérieur à 90%.

Etape (ii) :

Le produit isolé ci-dessus (10,00 mmol), le bromure de lithium (10,00 mmol) et du THF sec (10 ml) ont été placés dans un ballon de 20 ml dans lequel a également été placé un barreau magnétique d'agitation revêtu de Téflon®. Le ballon et son contenu ont ensuite été mis sous argon. Le sulfure de carbone (20,00 mmol) a alors été introduit dans le ballon goutte à goutte par seringue. Le ballon a ensuite été immergé dans un bain d'huile à 40 °C pendant 17 h. Un produit a été récupéré après précipitation dans le méthanol (20 ml), filtration et séchage à 23 °C sous vide.

Le polymère obtenu est solide à température ambiante.

Les analyses RMN $^1H$ ($CDCl_3$, 500 MHz, 25 °C) et $^{13}C$ ($CDCl_3$, 125 MHz, 25 °C) dudit polymère donnent les valeurs suivantes :

$^1H$ NMR: $\delta$ (ppm) unité de répétition 2.10 (4H*n), 5.43 (2H*n), groupement terminal = 3.60 O-C(S)-S-C***H***$_2$-CH-$CH_2$-O-C(O)-CH=CH, 4.49 O-C(S)-S-$CH_2$-CH-C***H***$_2$-O-C(O)-CH=CH, 5.39 O-C(S)-S-$CH_2$-C***H***-$CH_2$-O-C(O)-CH=CH, 5.85 O-C(S)-S-$CH_2$-CH-$CH_2$-O-C(O)-C***H***=CH, 7.08 O-C(S)-S-$CH_2$-CH-$CH_2$-OC(O)-CH=C***H***.

$^{13}C$ NMR: $\delta$ (ppm) unité de répétition 27.4, 32.7,131.4, groupement terminal = 36.1 O-C(S)-S-***C***$H_2$-CH-$CH_2$-O-C(O), 62.7 O-C(S)-S-$CH_2$-CH-***C***$H_2$-O-C(O), 87.7 OC(S)-S-$CH_2$-***C***H-$CH_2$-O-C(O), 119.9 O-C(S)-S-$CH_2$-CH-$CH_2$-O-

C(O)-***C***H=CH, 152.1 O-C(S)-S-$CH_2$-CH-$CH_2$-O-C(O) -CH=***C***H, 166.2 O-C(S)-S-$CH_2$-CH-$CH_2$-O-***C***(O), 210.2 O-***C***(S)-S-$CH_2$-CH-$CH_2$-O-C(O).

Ces valeurs confirment la structure ci-dessous :

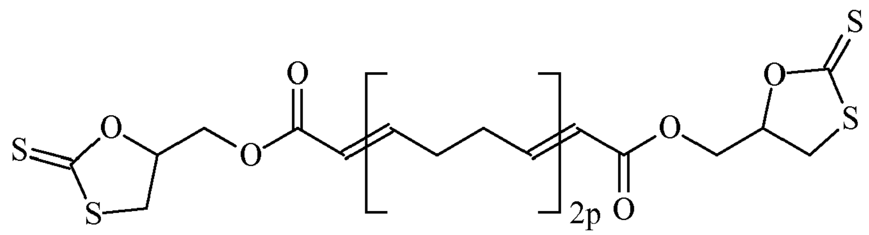

Cette structure est bien couverte par la formule (IV') définie précédemment.
La masse moléculaire moyenne en nombre Mn, mesurée par RMN est de 4700 g/mol.
L'indice de polymolécularité égal au rapport Mw/Mn (mesuré par chromatographie d'exclusion stérique avec étalon de polystyrène) est de 1,60.

**Exemple 2 :** synthèse d'un polymère comprenant deux groupements terminaux (2-thione-1,3-oxathiolan-4-yl)-méthylène-ester avec une étape de polymérisation du CDT en présence de $CTA^2$:

On répète l'exemple 1 en remplaçant dans l'étape (i) :

- le COD par le 1,5,9-cyclododécatriène (dénommé CDT) qui est disponible commercialement, par exemple auprès de la société Sigma Aldrich ;
- les 0,54 mmol de $CTA^1$ par 0,27 mmol du composé $CTA^2$ de formule :

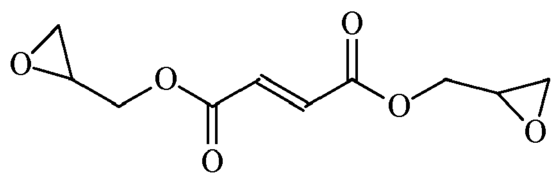

de sorte que le rapport des réactifs exprimé en nombre de moles : $CTA^2$/CDT est de 0,025, et sans introduire de benzoquinone.

On récupère également à la fin de l'étape (ii) un polymère sous la forme de poudre solide incolore dont l'analyse RMN $^1H/^{13}C$ est identique au polymère de l'exemple 1, confirmant ainsi la structure ci-dessous :

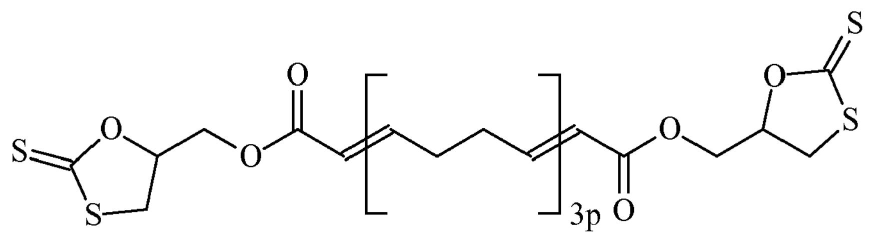

laquelle est donc également couverte par la formule (IV') définie précédemment.
La masse moléculaire moyenne en nombre Mn et l'indice de polydispersité sont, respectivement, de 6900 g/mol et de 1,80.

**Exemple 3 :** synthèse d'un polymère comprenant deux groupements terminaux (2-thione-1,3-oxathiolan-4-yl)-méthylène-éther avec une étape de polymérisation du CDT en présence de $CTA'^2$ :

On répète l'exemple 2 en remplaçant, comme agent de transfert de chaîne, le $CTA^2$ par $CTA'^2$ de formule :

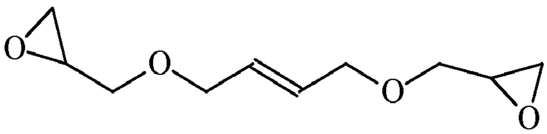

On récupère également à la fin de l'étape (ii) un polymère sous la forme de poudre solide incolore dont l'analyse RMN $^{1}H/^{13}C$ donne les valeurs suivantes :

$^{1}H$ NMR: δ (ppm) unité de répétition 2.10 (4H*n), 5.43 (2H*n), groupement terminal = 3.60 O-C(S)-S-C***H*₂**-CH-CH₂-O-, 4.04 O-C(S)-S-CH₂-CH-CH₂-O-C***H*₂**, 4.49 O-C(S)-S-CH₂-CH-C***H*₂**-O-, 5.39 O-C(S)-S-CH₂-C***H***-CH₂-O.

$^{13}C$ NMR: δ (ppm) unité de répétition 27.4, 32.7,131.4, groupement terminal = 41.5 O-C(S)-S-***C***H₂-CH-CH₂-O-, 69.1 O-C(S)-S-CH₂-CH-CH₂-O-***C***H₂, 73.9 O-C(S)-S-CH₂-CH-***C***H₂-O-, 88.3 O-C(S)-S-CH₂-***C***H-CH₂-O-, 210.2 O-***C***(S)-S-CH₂-CH-CH₂-O.

Ces valeurs confirment la structure ci-dessous :

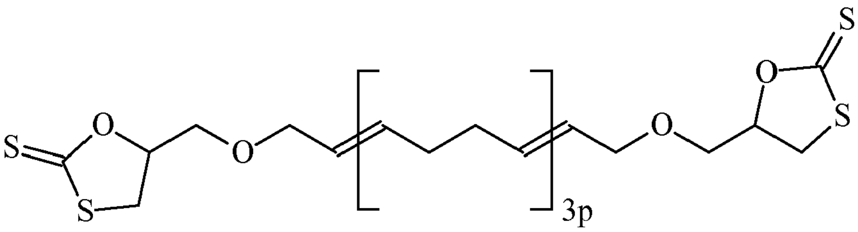

Cette structure est bien couverte par la formule (IV') définie précédemment.

La masse moléculaire moyenne en nombre Mn et l'indice de polydispersité sont, respectivement, de 6800 g/mol et de 1,80.

**Exemple 4 :** synthèse d'un polymère comprenant deux groupements terminaux (2-thione-1,3-oxathiolan-4-yl)-méthylène-ester avec une étape de polymérisation du CDT et du norbornène (cyclooléfine de formule (E)), en présence de $CTA^2$:

On répète l'exemple 2 en remplaçant les 10,8 mmol de CDT par un mélange de 5,4 mmol de CDT et de 5,4 mmol de norbornène, de formule :

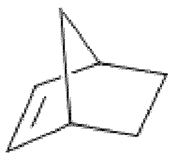

et disponible auprès de la société Sigma Aldrich.

Le rapport des réactifs exprimé en nombre de moles : $CTA^2$/(CDT + norbornène) est de 0,025.

On obtient à la fin de l'étape (ii) un copolymère liquide dont l'analyse RMN donne les valeurs suivantes :

$^{1}H$ NMR: δ (ppm) unité de répétition *trans :* 1.08 (2H*n), 1.39 (4H*n), 2.07 (4H*n), 2.47 (2H*n *trans),* 5.24-5.44 (4H*n *trans),* unité de répétition *cis :* 1.82-1.91(6H*n), 2.07 (4H*n), 2.82 (2H*n *cis),* 5.24-5,44 (4H*n *cis),* groupement terminal = 3.60 0-C(S)-S-C***H*₂**-CH-CH₂-O-C(O)-CH=CH, 4.49 O-C(S)-S-CH₂-CH-C***H*₂**-O-C(O)-CH=CH, 5,39 O-C(S)-S-CH₂-C***H***-CH₂-O-C(O)-CH=CH, 5.85 O-C(S)-S-CH₂-CH-CH₂-O-C(O) -C***H***=CH, 7.08 O-C(S)-S-CH₂-CH-CH₂-O-C(O)-CH=C***H***.

$^{13}C$ NMR: δ (ppm) unité de répétition: 27.4, 33.1, 42.1, 43.4, 130.3, 133.1, groupement terminal = 36.1 O-C(S)-S-***C***H₂-CH-CH₂-O-C(O), 62.7 O-C(S)-S-CH₂-CH-***C***H₂-O-C(O), 87.7 O-C(S)-S-CH₂-***C***H-CH₂-O-C(O), 119.9 O-C(S)-S-CH₂-CH-CH₂-O-C(O)-***C***H=CH, 152.1 O-C(S)-S-CH₂-CH-CH₂-O-C(O)-CH=***C***H, 166.2 O-C(S)-S-CH₂-CH-CH₂-O-***C***(O), 210.2 O-***C***(S)-S-CH₂-CH-CH₂-O-C(O).

Ces valeurs confirment la structure ci-dessous :

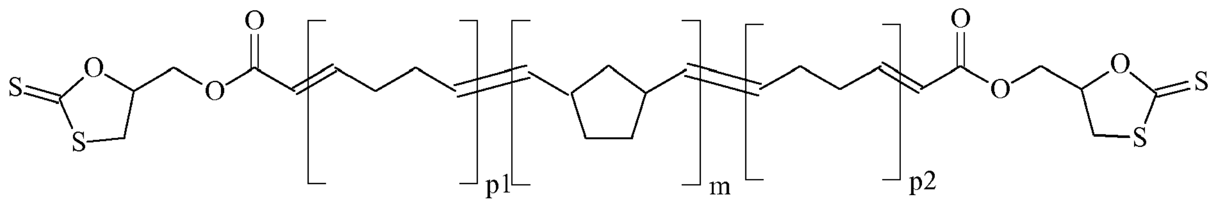

Cette structure est bien couverte par la formule (III') définie précédemment.

La masse moléculaire moyenne en nombre Mn et l'indice de polydispersité sont, respectivement, de 5500 g/mol et de 1,60.

**Exemple 5 :** synthèse d'un polymère comprenant deux groupements terminaux (2-thione-1,3-oxathiolan-4-yl)-méthylène-éther avec une étape de polymérisation du CDT et du norbornène, en présence de CTA'$^2$:

On répète l'exemple 4 en remplaçant CTA$^2$ par CTA'$^2$.

On obtient à la fin de l'étape (ii) un copolymère liquide dont l'analyse RMN donne les valeurs suivantes :

> $^1$H NMR: δ (ppm) unité de répétition *trans :* 1.08 (2H*n), 1.39 (4H*n), 2.07 (4H*n), 2.47 (2H*n *trans),* 5.24-5.44 (4H*n *trans),* unité de répétition *cis :* 1.82-1.91(6H*n), 2.07 (4H*n), 2.82 (2H*n *cis),* 5.24-5,44 (4H*n *cis),* groupement terminal = 3.60 O-C(S)-S-C***H***$_2$-CH-CH$_2$-O-, 4.04 O-C(S)-S-CH$_2$-CH-CH$_2$-O-C***H***$_2$, 4.49 O-C(S)-S-CH$_2$-CH-C***H***$_2$-O-, 5.39 O-C(S)-S-CH$_2$-C***H***-CH$_2$-O-
> $^{13}$C NMR: δ (ppm) unité de répétition: 27.4, 33.1, 42.1, 43.4, 130.3, 133.1, groupement terminal = 41.5 O-C(S)-S-***C***H$_2$-CH-CH$_2$-O-, 69.1 O-C(S)-S-CH$_2$-CH-CH$_2$-O-***C***H$_2$, 73.9 O-C(S)-S-CH$_2$-CH-***C***H$_2$-O-, 88.3 O-C(S)-S-CH$_2$-***C***H-CH$_2$-O-, 210.2 O-***C***(S)-S-CH$_2$-CH-CH$_2$-O-.

Ces valeurs confirment la structure ci-dessous :

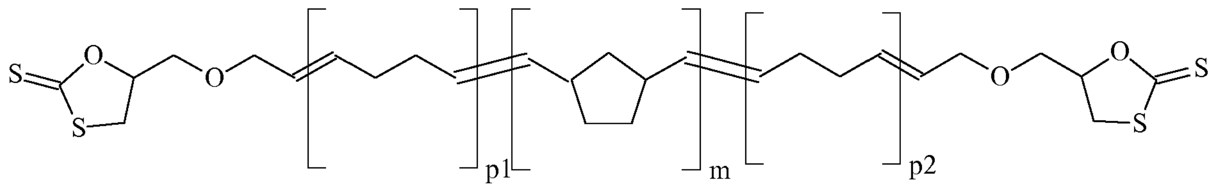

Cette structure est bien couverte par la formule (III') définie précédemment.

La masse moléculaire moyenne en nombre Mn et l'indice de polydispersité sont, respectivement, de 5400 g/mol et de 1,60.

**Exemple 6 :** synthèse d'un polymère comprenant deux groupements terminaux (2-thione-1,3-oxathiolan-4-yl)-méthylène-ester avec une étape de polymérisation du CDT et du 5-norbornene-2-carboxylate de méthyle (cyclooléfine de formule (E)) en présence de CTA$^2$:

On répète l'exemple 4 en remplaçant le norbornène par le 5-norbornene-2-carboxylate de méthyle, de formule :

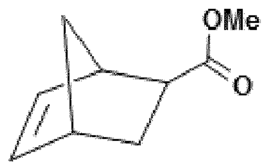

et disponible auprès de la société Sigma Aldrich.

On obtient également un copolymère liquide à température ambiante, dont l'analyse par RMN donne les valeurs suivantes :

> $^1$H NMR: δ (ppm) unité de répétition 1.08-1.26 (1H*n), 1.56-1.99 (3H*n), 2.07 (4H*n), 2.44-3.02 (3H*n), 5.13-5.29 (4H*n), groupement terminal = 3.60 O-C(S)-S-C***H***$_2$-CH-CH$_2$-O-C(O)-CH=CH, 4.49 O-C(S)-S-CH$_2$-CH-C***H***$_2$-O-

C(O)-CH=CH, 5.39 O-C(S)-S-$CH_2$-C***H***-$CH_2$-O-C(O)-CH=CH, 5.85 O-C(S)-S-$CH_2$-CH-$CH_2$-OC(O)-C***H***=CH, 7.08 O-C(S)-S-$CH_2$-CH-$CH_2$-O-C(O)-CH=C***H***.
$^{13}$C NMR: δ (ppm) unité de répétition: 27.4, 33.1, 36.1-42.9, 130.3, 133.1, groupement terminal = 36.1 O-C(S)-S-***C***$H_2$-CH-$CH_2$-O-C(O), 62.7 O-C(S)-S-$CH_2$-CH-***C***$H_2$-O-C(O), 87.7 O-C(S)-S-$CH_2$-***C***H-$CH_2$-O-C(O), 119.9 O-C(S)-S-$CH_2$-CH-$CH_2$-O-C(O)-***C***H=CH, 152.1 O-C(S)-S-$CH_2$-CH-$CH_2$-O-C(O)-CH=***C***H, 166.2 O-C(S)-S-$CH_2$-CH-$CH_2$-O-***C***(O), 210.2 O-***C***(S)-S-$CH_2$-CH-$CH_2$-O-C(O).

Ces valeurs confirment la structure :

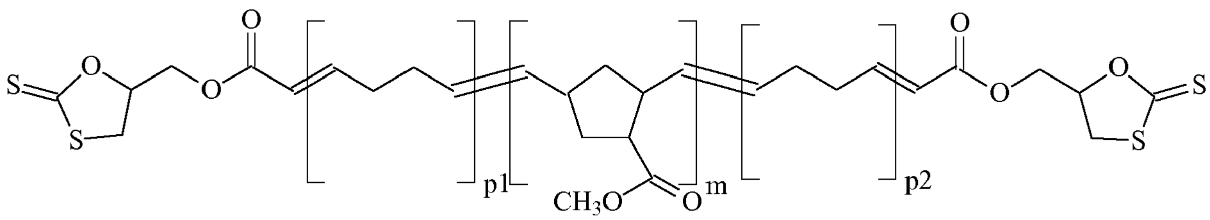

Cette structure est bien couverte par la formule (III') définie précédemment.
La masse moléculaire moyenne en nombre Mn et l'indice de polydispersité sont, respectivement, de 6600 g/mol et de 1,70.

**Exemple 7 :** synthèse d'un polymère comprenant deux groupements terminaux (2-thione-1,3-oxathiolan-4-yl)-méthylène-éther avec une étape de polymérisation du CDT et du 5-norbornene-2-carboxylate de méthyle (cyclooléfine de formule (E)) en présence de CTA'$^2$:

On répète l'exemple 6 en remplaçant CTA$^2$ par CTA'$^2$.
On obtient à la fin de l'étape (ii) un copolymère liquide dont l'analyse RMN donne les valeurs suivantes :

$^1$H NMR: δ (ppm) unité de répétition 1.08-1.26 (1H*n), 1.56-1.99 (3H*n), 2.07 (4H*n), 2.44-3.02 (3H*n), 5.13-5.29 (4H*n), groupement terminal = 3.60 O-C(S)-S-C***$H_2$***-CH-$CH_2$-O-, 4.04 O-C(S)-S-$CH_2$-CH-$CH_2$-O-C***$H_2$***, 4.49 O-C(S)-S-$CH_2$-CH-C***$H_2$***-O-, 5.39 O-C(S)-S-$CH_2$-C***H***-$CH_2$-O-
$^{13}$C NMR: δ (ppm) unité de répétition: 27.4, 33.1, 36.1-42.9, 130.3, 133.1, groupement terminal = 41.5 O-C(S)-S-***C***$H_2$-CH-$CH_2$-O-, 69.1 O-C(S)-S-$CH_2$-CH-$CH_2$-O-***C***$H_2$, 73.9 O-C(S)-S-$CH_2$-CH-***C***$H_2$-O-, 88.3 O-C(S)-S-$CH_2$-***C***H-$CH_2$-O-, 210.2 O-***C***(S)-S-$CH_2$-CH-$CH_2$-O-.

Ces valeurs confirment la structure :

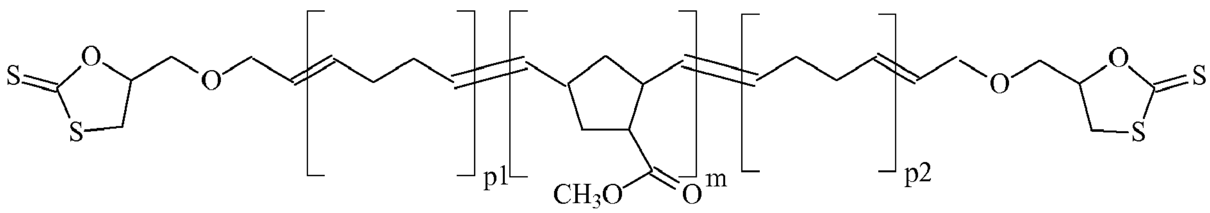

Cette structure est bien couverte par la formule (III') définie précédemment.
La masse moléculaire moyenne en nombre Mn et l'indice de polydispersité sont, respectivement, de 6600 g/mol et de 1,60.

**Exemple 8 :** synthèse d'un polymère comprenant deux groupements terminaux (2-thione-1,3-oxathiolan-4-yl)-méthylène-ester avec une étape de polymérisation du CDT et du 5-oxanorbornene-2-carboxylate de méthyle (cyclooléfine de formule (E)) en présence de CTA$^2$:

On répète l'exemple 4 en remplaçant le norbornène par le 5-oxanorbornene-2-carboxylate de méthyle, de formule :

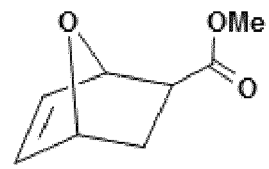

et disponible auprès de la société Boc Sciences.

On obtient également un copolymère liquide à température ambiante, dont l'analyse par RMN donne les valeurs suivantes :

$^1$H NMR: δ (ppm) unité de répétition 2,07 (4H*n), 2.16-2.36 (2H*n), 2.79 (1H*n), 4.44-4.74 (2H*n), 5.60-5.77 (4H*n), groupement terminal = 3.60 O-C(S)-S-C***$H_2$***-CH-$CH_2$-O-C(O)-CH=CH, 4.49 O-C(S)-S-$CH_2$-CH-C***$H_2$***-O-C(O)-CH=CH, 5.39 0-C(S)-S-$CH_2$-C***H***-$CH_2$-O-C(O)-CH=CH, 5.85 O-C(S)-S-$CH_2$-CH-$CH_2$-O-C(O)-CH=CH, 7.08 O-C(S)-S-$CH_2$-CH-$CH_2$-O-C(O)-CH=C***H***.

$^{13}$C NMR: δ (ppm) unité de répétition: 27.4, 33.1, 36.23, 49.4-53.5, 78.8, 81.7, 130.3,133.1, groupement terminal = 36.1 O-C(S)-S-***C***$H_2$-CH-$CH_2$-O-C(O), 62.7 OC(S)-S-$CH_2$-CH-***C***$H_2$-O-C(O), 87.7 O-C(S)-S-$CH_2$-***C***H-$CH_2$-O-C(O), 119.9 0-C(S)-S-$CH_2$-CH-$CH_2$-O-C(O)-***C***H=CH, 152.1 O-C(S)-S-$CH_2$-CH-$CH_2$-O-C(O)-CH=CH, 166.2 O-C(S)-S-$CH_2$-CH-$CH_2$-O-***C***(O), 210.2 O-***C***(S)-S-$CH_2$-CH-$CH_2$-O-C(O).

Ces valeurs confirment la structure :

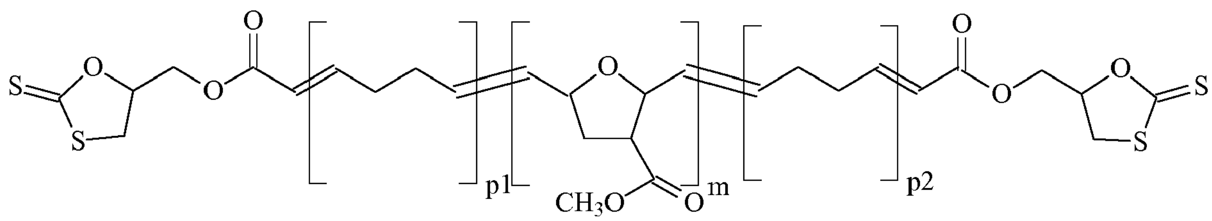

qui est bien couverte par la formule (III') définie précédemment.

La masse moléculaire moyenne en nombre Mn et l'indice de polydispersité sont, respectivement, de 6600 g/mol et de 1,70.

**Exemple 9 :** synthèse d'un polymère comprenant deux groupements terminaux (2-thione-1,3-oxathiolan-4-yl)-méthylène-éther avec une étape de polymérisation du CDT et du 5-oxanorbornene-2-carboxylate de méthyle, en présence de CTA'$^2$:

On répète l'exemple 8 en remplaçant CTA$^2$ par CTA'$^2$.

On obtient à la fin de l'étape (ii) un copolymère liquide dont l'analyse RMN donne les valeurs suivantes :

$^1$H NMR: δ (ppm) unité de répétition 2,07 (4H*n), 2.16-2.36 (2H*n), 2.79 (1H*n), 4.44-4.74 (2H*n), 5.60-5.77 (4H*n), groupement terminal = 3.60 O-C(S)-S-C***$H_2$***-CH-$CH_2$-O-, 4.04 O-C(S)-S-$CH_2$-CH-$CH_2$-O-C***$H_2$***, 4.49 O-C(S)-S-$CH_2$-CH-C***$H_2$***-O-, 5.39 O-C(S)-S-$CH_2$-C***H***-$CH_2$-O-

$^{13}$C NMR: δ (ppm) unité de répétition: 27.4, 33.1, 36.23, 49.4-53.5, 78.8, 81.7, 130.3,133.1, groupement terminal = 41.5 O-C(S)-S-***C***$H_2$-CH-$CH_2$-O-, 69.1 O-C(S)-S-$CH_2$-CH-$CH_2$-O-***C***$H_2$, 73.9 O-C(S)-S-$CH_2$-CH-***C***$H_2$-O-, 88.3 O-C(S)-S-$CH_2$-***C***H-$CH_2$-0-, 210.2 O-***C***(S)-S-$CH_2$-CH-$CH_2$-O-.

Ces valeurs confirment la structure :

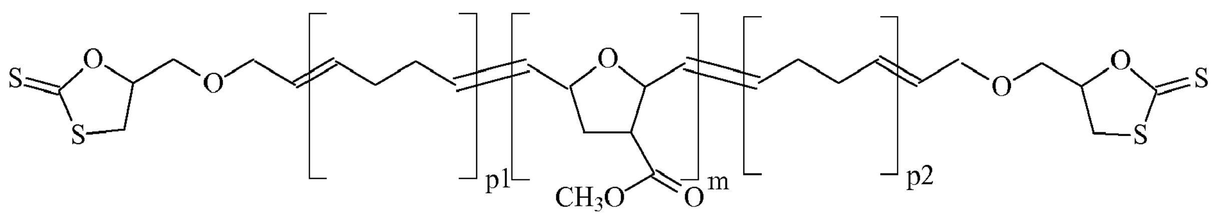

qui est bien couverte par la formule (III') définie précédemment.

La masse moléculaire moyenne en nombre Mn et l'indice de polydispersité sont, respectivement, de 6500 g/mol et de 1,80.

**Exemple 10 :** synthèse d'un polymère comprenant deux groupements terminaux (2-thione-1,3-oxathiolan-4-yl)-méthylène-ester avec une étape de polymérisation du CDT et du dicyclopentadiène (cyclooléfine de formule (E)) en présence de $CTA^2$:

On répète l'exemple 4 en remplaçant le norbornène par le dicyclopentadiène, de formule :

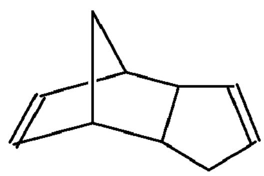

et disponible auprès de la société Sigma Aldrich.

On obtient également un copolymère liquide à température ambiante, dont l'analyse par RMN donne les valeurs suivantes :

$^1$H NMR ($CDCl_3$, 500 MHz, 298 K): $\delta$ (ppm) unité de répétition 1.24 (1H*n), 1.59 (1H*n), 2.07 (4H*n), 2.26 (2H*n), 2.62 (1H*n), 2.85 (2H*n), 3.24 (1H*n), 5.36-5.68 (4H*n), groupement terminal = 3.60 O-C(S)-S-C***H₂***-CH-CH$_2$-O-C(O)-CH=CH, 4.49 O-C(S)-S-CH$_2$-CH-C***H₂***-O-C(O)-CH=CH, 5.39 O-C(S)-S-CH$_2$-C***H***-CH$_2$-OC(O)-CH=CH, 5.85 O-C(S)-S-CH$_2$-CH-CH$_2$-O-C(O)-C***H***=CH, 7.08 O-C(S)-S-CH$_2$-CH-CH$_2$-O-C(O)-CH=C***H***.

$^{13}$C NMR ($CDCl_3$, 125 MHz, 298 K): $\delta$ (ppm) unité de répétition 27.4, 33.1, 35.1, 38.0, 42.3, 46.0, 47.0, 55.4, 130.5, groupement terminal = 36.1 O-C(S)-S-***C***H$_2$-CH-CH$_2$-O-C(O), 62.7 O-C(S)-S-CH$_2$-CH-***C***H$_2$-O-C(O), 87.7 O-C(S)-S-CH$_2$-***C***H-CH$_2$-O-C(O), 119.9 O-C(S)-S-CH$_2$-CH-CH$_2$-O-C(O)-***C***H=CH, 152.1 O-C(S)-S-CH$_2$-CH-CH$_2$-O-C(O)-CH=***C***H, 166.2 O-C(S)-S-CH$_2$-CH-CH$_2$-O-***C***(O), 210.2 0-***C***(S)-S-CH$_2$-CH-CH$_2$-O-C(O).

Ces valeurs confirment la structure :

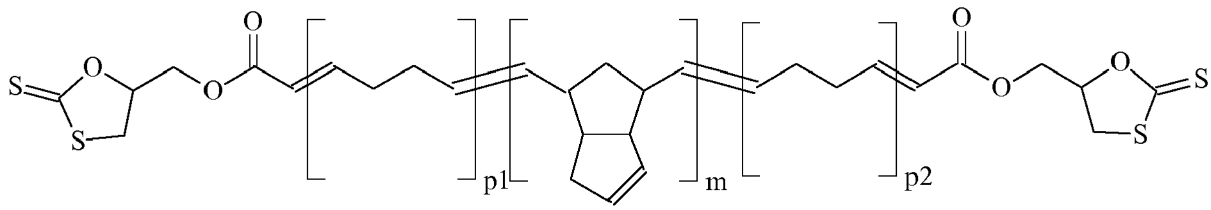

Cette structure est bien couverte par la formule (III') définie précédemment.

La masse moléculaire moyenne en nombre Mn et l'indice de polydispersité sont, respectivement, de 6300 g/mol et de 2,00.

**Exemple 11 :** synthèse d'un polymère comprenant deux groupements terminaux (2-thione-1,3-oxathiolan-4-yl)-méthylène-éther avec une étape de polymérisation du CDT et du dicyclopentadiène, en présence de $CTA'^2$:

On répète l'exemple 10 en remplaçant $CTA^2$ par $CTA'^2$.

On obtient à la fin de l'étape (ii) un copolymère liquide dont l'analyse RMN donne les valeurs suivantes :

$^1$H NMR: $\delta$ (ppm) unité de répétition 1.24 (1H*n), 1.59 (1H*n), 2.07 (4H*n), 2.26 (2H*n), 2.62 (1 H*n), 2.85 (2H*n), 3.24 (1 H*n), 5.36-5.68 (4H*n), groupement terminal = 3.60 O-C(S)-S-C***H₂***-CH-CH$_2$-O-, 4.04 O-C(S)-S-CH$_2$-CH-CH$_2$-O-C***H₂***, 4.49 0-C(S)-S-CH$_2$-CH-C***H₂***-O-, 5.39 O-C(S)-S-CH$_2$-C***H***-CH$_2$-O-

$^{13}$C NMR: $\delta$ (ppm) unité de répétition 27.4, 33.1, 35.1, 38.0, 42.3, 46.0, 47.0, 55.4, 130.5, groupement terminal = 41.5 O-C(S)-S-***C***H$_2$-CH-CH$_2$-O-, 69.1 O-C(S)-S-CH$_2$-CH-CH$_2$-O-***C***H$_2$, 73.9 O-C(S)-S-CH$_2$-CH-***C***H$_2$-O-, 88.3 O-C(S)-S-CH$_2$-***C***H-CH$_2$-O-, 210.2 O-***C***(S)-S-CH$_2$-CH-CH$_2$-O-.

Ces valeurs confirment la structure :

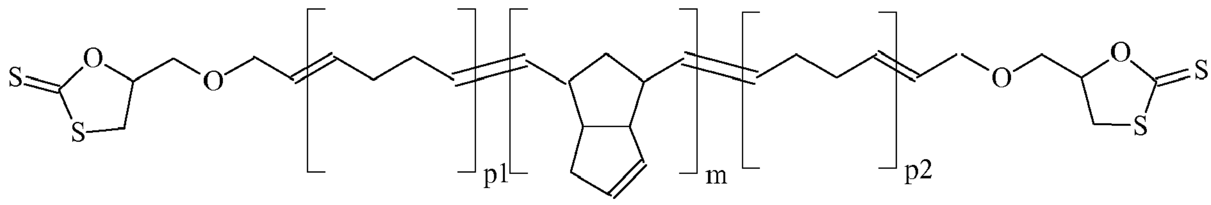

qui est bien couverte par la formule (III') définie précédemment.

La masse moléculaire moyenne en nombre Mn et l'indice de polydispersité sont, respectivement, de 6300 g/mol et de 1,90.

**Exemple 12 :** synthèse d'un polymère comprenant deux groupements terminaux (2-thione-1,3-oxathiolan-4-yl)-méthylène-ester avec une étape de polymérisation du CDT et du 5-n-hexyl-cyclooctène (cyclooléfine de formule (D)) en présence de $CTA^2$:

Le 5-n-hexyl-cyclooctène utilisé dans cet exemple a été synthétisé selon la voie indiquée dans le schéma réactionnel ci-dessous (cf composé n° 5) :

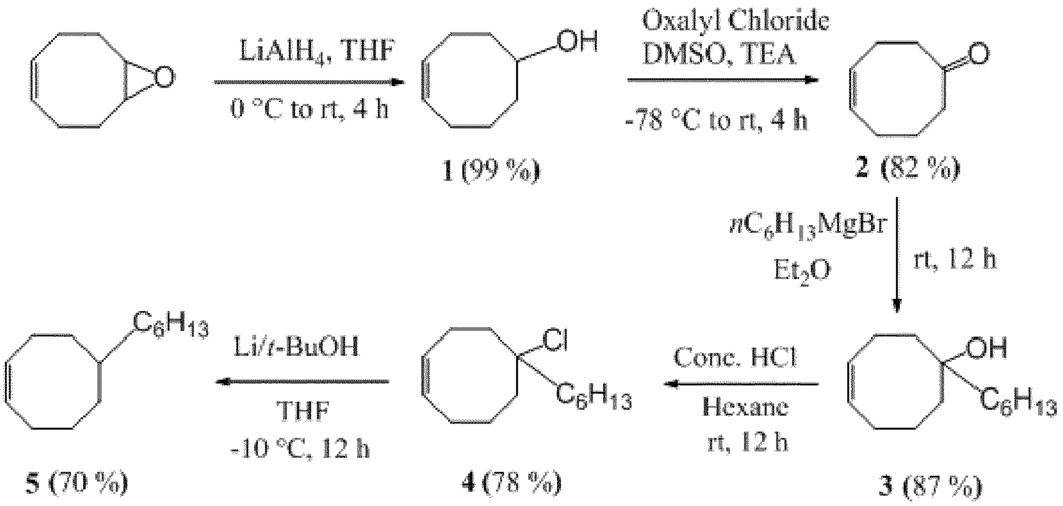


Les matières premières (notamment le 5,6-époxycyclooctène), réactifs et solvants utilisés lors de ces synthèses sont des produits commerciaux de la société Sigma Aldrich. Il est fait référence pour plus amples précisions à la publication de A. Diallo et al. (Polymer Chemistry, Vol. 5, Issue 7, 7 April 2014, pp 2583-2591), ou encore à la référence Kobayashi et al J. Am. Chem. Soc. 2011, 133, pp 5794-5797).

On répète l'exemple 4 en remplaçant le norbornène par le 5-n-hexyl-cyclooctène.

On obtient également un copolymère liquide à température ambiante, dont l'analyse par RMN donne les valeurs suivantes :

$^1H$ NMR: $\delta$ (ppm) unité de répétition 0.83 (3H*n), 1.27 (16H*n), 2.07 (4H*n), 2.17 (5H*n), 5.37 (2H*n), groupement terminal = 3.60 O-C(S)-S-C***H₂***-CH-CH$_2$-O-C(O)-CH=CH, 4.49 O-C(S)-S-CH$_2$-CH-C***H₂***-O-C(O)-CH=CH, 5.39 O-C(S)-S-CH$_2$-C***H***-CH$_2$-O-C(O)-CH=CH, 5.85 O-C(S)-S-CH$_2$-CH-CH$_2$-O-C(O)-C***H***=CH, 7.08 0-C(S)-S-CH$_2$-CH-CH$_2$-O-C(O)-CH=C***H***.

$^{13}C$ NMR : $\delta$ (ppm) unité de répétition 14.1, 22.7, 27.4, 29.6, 31.8, 32.4, 33.1, 33.8, 40.6, 130.5, groupement terminal = 36.1 O-C(S)-S-***C***H$_2$-CH-CH$_2$-O-C(O), 62.7 O-C(S)-S-CH$_2$-CH-***C***H$_2$-O-C(O), 87.7 O-C(S)-S-CH$_2$-***C***H-CH$_2$-O-C(O), 119.9 O-C(S)-S-CH$_2$-CH-CH$_2$-O-C(O)-***C***H=CH, 152.1 O-C(S)-S-CH$_2$-CH-CH$_2$-O-C(O)-CH=CH, 166.2 O-C(S)-S-CH$_2$-CH-CH$_2$-O-***C***(O), 210.2 O-***C***(S)-S-CH$_2$-CH-CH$_2$-O-C(O).

Ces valeurs confirment la structure :

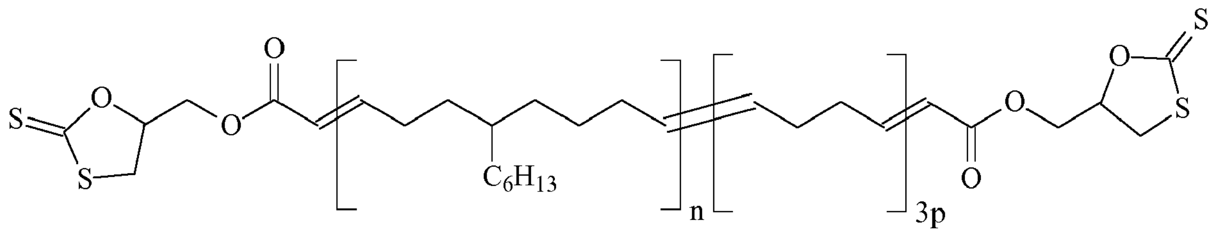

qui est bien couverte par la formule (II') définie précédemment.

La masse moléculaire moyenne en nombre Mn et l'indice de polydispersité sont, respectivement, de 7500 g/mol et de 1,80.

**Exemple 13 :** synthèse d'un polymère comprenant deux groupements terminaux (2-thione-1,3-oxathiolan-4-yl)-méthylène-éther avec une étape de polymérisation du CDT et du 5-n-hexyl-cyclooctène, en présence de CTA'$^2$:

On répète l'exemple 12 en remplaçant CTA$^2$ par CTA'$^2$.

On obtient à la fin de l'étape (ii) un copolymère liquide dont l'analyse RMN donne les valeurs suivantes :

$^1$H NMR: δ (ppm) unité de répétition 0.83 (3H*n), 1.27 (16H*n), 2.07 (4H*n), 2.17 (5H*n), 5.37 (2H*n), groupement terminal = 3.60 O-C(S)-S-C***H₂***-CH-CH$_2$-O-, 4.04 0-C(S)-S-CH$_2$-CH-CH$_2$-O-C***H₂***, 4.49 O-C(S)-S-CH$_2$-CH-C***H₂***-O-, 5.39 0-C(S)-S-CH$_2$-C***H***-CH$_2$-O-.

$^{13}$C NMR : δ (ppm) unité de répétition 14.1, 22.7, 27.4, 29.6, 31.8, 32.4, 33.1, 33.8, 40.6, 130.5, groupement terminal = 41.5 O-C(S)-S-***C***H$_2$-CH-CH$_2$-O-, 69.1 O-C(S)-S-CH$_2$-CH-CH$_2$-O-***C***H$_2$, 73.9 O-C(S)-S-CH$_2$-CH-***C***H$_2$-O-, 88.3 O-C(S)-S-CH$_2$-***C***H-CH$_2$-O-, 210.2 O-***C***(S)-S-CH$_2$-CH-CH$_2$-O-.

Ces valeurs confirment la structure :

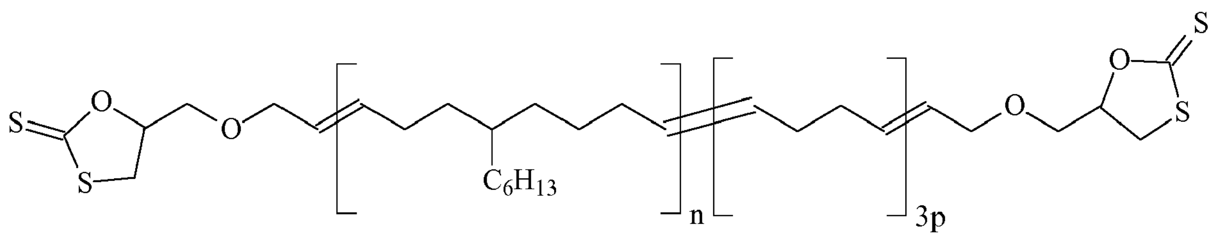

qui est bien couverte par la formule (II') définie précédemment.

La masse moléculaire moyenne en nombre Mn et l'indice de polydispersité sont, respectivement, de 7600 g/mol et de 1,80.

**Exemple 14 :** synthèse d'un polymère comprenant deux groupements terminaux (2-thione-1,3-oxathiolan-4-yl)-méthylène-ester avec une étape de polymérisation du CDT, du cyclooctène et du norbornène, en présence de CTA$^2$:

On répète l'exemple 2 en remplaçant les 10,8 mmol de COD par un mélange de 3,6 mmol de CDT, 3,6 mmol de cyclooctène et 3,6 mmol de norbornène.

Le rapport des réactifs exprimé en nombre de moles : CTA$^2$/(CDT + cyclooctène + norbornène) est de 0,025.

On obtient également un copolymère liquide à température ambiante, dont l'analyse par RMN donne les valeurs suivantes :

$^1$H NMR: δ (ppm) unité de répétition *trans :* 1.08 (2H*n), 1.26 (8H*n), 1.39 (4H*n), 2.00 (4H*n), 2.07 (4H*n), 2.47 (2H*n *trans),* 5.24-5.44 (6H*n *trans),* unité de répétition *cis :* 1.26 (8H*n), 1.82-1.91(6H*n), 2.00 (4H*n), 2.07 (4H*n), 2.82 (2H*n *cis*), 5.24-5.44 (6H*n *cis),* groupement terminal = 3.60 O-C(S)-S-C***H₂***-CH-CH$_2$-O-C(O)-CH=CH, 4.49 O-C(S)-S-CH$_2$-CH-C***H₂***-O-C(O)-CH=CH, 5.39 O-C(S)-S-CH$_2$-C***H***-CH$_2$-OC(O)-CH=CH, 5.85 O-C(S)-S-CH$_2$-CH-CH$_2$-O-C(O)-C***H***=CH, 7.08 O-C(S)-S-CH$_2$-CH-CH$_2$-O-C(O)-CH=C***H***.

$^{13}$C NMR: δ (ppm) unité de répétition 27.4, 28.5, 32.5, 33.1, 42.1, 43.4, 130.3, 133.1, groupement terminal = 36.1 O-C(S)-S-***C***H$_2$-CH-CH$_2$-O-C(O), 62.7 O-C(S)-S-CH$_2$-CH-***C***H$_2$-O-C(O), 87.7 O-C(S)-S-CH$_2$-***C***H-CH$_2$-O-C(O), 119.9 O-C(S)-S-CH$_2$-CH-CH$_2$-O-C(O)-***C***H=CH, 152.1 O-C(S)-S-CH$_2$-CH-CH$_2$-O-C(O)-CH=CH, 166.2 O-C(S)-S-

$CH_2$-CH-$CH_2$-O-***C***(O), 210.2 O-***C***(S)-S-$CH_2$-CH-$CH_2$-O-C(O).

Ces valeurs confirment la structure :

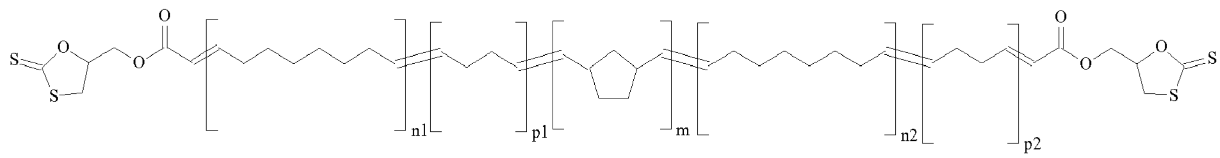

Cette structure est bien couverte par la formule (I') définie précédemment.

La masse moléculaire moyenne en nombre Mn et l'indice de polydispersité sont, respectivement, de 5800 g/mol et de 1,90.

**Exemple 15 :** synthèse d'un polymère comprenant deux groupements terminaux (2-thione-1,3-oxathiolan-4-yl)-méthylène-éther avec une étape de polymérisation du CDT, du cyclooctène et du norbornène, en présence de CTA'$^2$:

On répète l'exemple 14 en remplaçant CTA$^2$ par CTA'$^2$.

On obtient à la fin de l'étape (ii) un copolymère liquide dont l'analyse RMN donne les valeurs suivantes :

$^1$H NMR: δ (ppm) unité de répétition *trans :* 1.08 (2H*n), 1.26 (8H*n), 1.39 (4H*n), 2.00 (4H*n), 2.07 (4H*n), 2.47 (2H*n *trans*), 5.24-5.44 (6H*n *trans*), unité de répétition *cis :* 1.26 (8H*n), 1.82-1.91(6H*n), 2.00 (4H*n), 2.07 (4H*n), 2.82 (2H*n *cis*), 5.24-5.44 (6H*n *cis*), groupement terminal = 3.60 O-C(S)-S-C***H***$_2$-CH-$CH_2$-O-, 4.04 O-C(S)-S-$CH_2$-CH-$CH_2$-O-C***H***$_2$, 4.49 O-C(S)-S-$CH_2$-CH-C***H***$_2$-O-, 5.39 O-C(S)-S-$CH_2$-C***H***-$CH_2$-0-.

$^{13}$C NMR:δ (ppm) unité de répétition 27.4, 28.5, 32.5, 33.1, 42.1, 43.4, 130.3, 133.1, groupement terminal = 41.5 O-C(S)-S-***C***$H_2$-CH-$CH_2$-O-, 69.1 O-C(S)-S-$CH_2$-CH-$CH_2$-O-***C***$H_2$, 73.9 O-C(S)-S-$CH_2$-CH-$CH_2$-O-, 88.3 O-C(S)-S-$CH_2$-CH-$CH_2$-O-, 210.2 O-***C***(S)-S-$CH_2$-CH-$CH_2$-O-.

Ces valeurs confirment la structure :

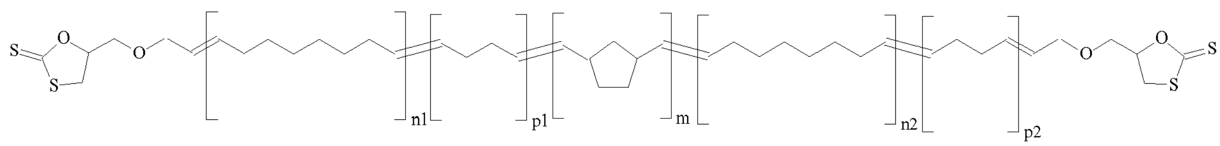

Cette structure est bien couverte par la formule (I') définie précédemment.

La masse moléculaire moyenne en nombre Mn et l'indice de polydispersité sont, respectivement, de 5800 g/mol et de 1,80.

**Exemple 16 :** synthèse d'un poly(thio)uréthane par réaction du polymère de l'exemple 2 avec une diamine à 80 °C :

Il est mis en réaction à 80°C, et dans un rapport stoechiométrique, un mélange de la polyoléfine (2-thione-1,3-oxathiolan-4-yl)-méthylène-ester de l'exemple 2 (solide à température ambiante) avec une diamine primaire de type polyéther diamine (JEFFAMINE EDR 176, Huntsman) et ce pendant une durée correspondant à la disparition complète de la bande infrarouge caractéristique des groupements 2-thione-1,3-oxathiolan-4-yle (bande C=S à 1200 $cm^{-1}$ en Infra-Rouge), et à l'apparition des bandes caractéristiques de la liaison thiocarbamate (bande C=S à 1530 $cm^{-1}$ en Infra-Rouge) et des fonctions thiols et disulfures (bande SH à 2500 $cm^{-1}$ et bande S-S à 510 $cm^{-1}$ en Raman).

Cette durée de réaction est inférieure à 3 h.

**Exemple 17 :** synthèse d'un poly(thio)uréthane par réaction du polymère de l'exemple 4 avec une diamine à 23 °C :

On répète l'exemple 16 avec la polyoléfine (2-thione-1,3-oxathiolan-4-yl)-méthylène-ester liquide de l'exemple 6 en procédant à la réaction du mélange à température ambiante (23°C).

La durée de réaction est inférieure à 3 h.

**Exemple 18 :** synthèse d'un poly(thio)uréthane par réaction du polymère de l'exemple 3 avec une diamine à 80 °C :

On répète l'exemple 16 avec la polyoléfine (2-thione-1,3-oxathiolan-4-yl)-méthylène-éther solide de l'exemple 3.

La durée de réaction est inférieure à 3 h.

**Exemple 19 :** synthèse d'un poly(thio)uréthane par réaction du polymère de l'exemple 7 avec une diamine à 23 °C :

On répète l'exemple 17 avec la polyoléfine (2-thione-1,3-oxathiolan-4-yl)-méthylène-éther liquide visqueuse de l'exemple 7.

La durée de réaction est inférieure à 3 h.

## Revendications

1. Polymère hydrocarboné comprenant deux groupements terminaux dithiocyclocarbonate, ledit polymère hydrocarboné ayant la formule (I) :

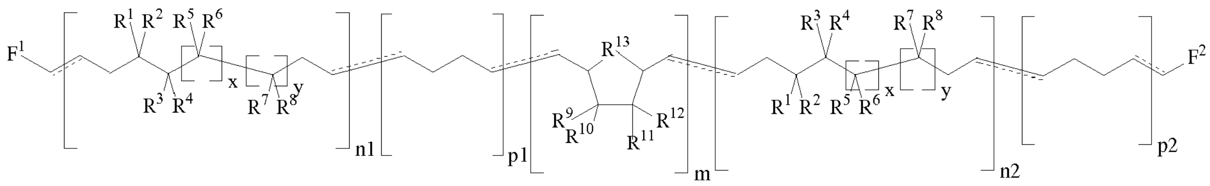

(I)

dans laquelle :

- $F^1$ et $F^2$ sont les radicaux monovalents de formules respectives (IIa) et (IIb) :

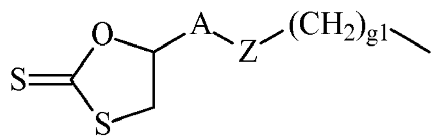

(IIa)

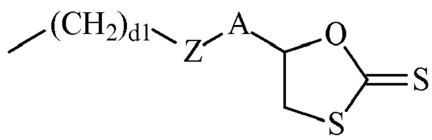

(IIb)

ou bien $F^1$ et $F^2$ sont les radicaux monovalents de formules respectives (II'a) et (II'b) :

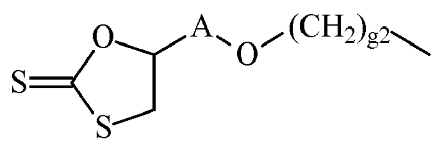

(II'a)

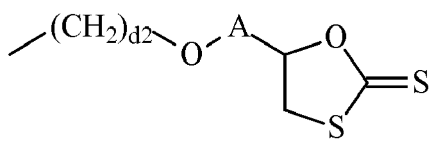

(II'b)

dans lesquelles :

- g1 et d1, identiques ou différents, représentent un nombre entier égal à 0, 1, 2 ou 3 ;
- g2 et d2, identiques ou différents, représentent un nombre entier égal à 1, 2 ou 3 ;
- A représente un radical divalent C1-C9 alkylène ;
- Z est tel que :

    - le groupe divalent -A-Z- est le groupe -A-C(=O)O- et le groupe divalent -Z-A- est le groupe-OC(=O)-A- sous réserve que g1 et d1 soient chacun différent de 0 ; ou bien
    - le groupe divalent -A-Z- est le groupe -A-OC(=O)- et le groupe divalent -Z-A- est le groupe -C(=O)O-A- ;

- chaque liaison carbone - carbone de la chaîne principale du polymère, notée ------ représente une double liaison ou une simple liaison, conformément aux règles de valence de la chimie organique ;
- $R^1$, $R^2$, $R^3$, $R^4$, $R^5$, $R^6$, $R^7$ et $R^8$, identiques ou différents, représentent :

  - un atome d'hydrogène ou d'halogène ; ou
  - un radical comprenant de 1 à 22 atomes de carbone choisi parmi alkyle, alcényle, alcoxycarbonyle, alcényloxycarbonyle, alkylcarbonyloxy, alcénylcarbonyloxy, la chaîne hydrocarbonée dudit radical pouvant éventuellement être interrompue par au moins un atome d'oxygène ou un atome de soufre ; en outre:
  - au moins un des groupes $R^1$ à $R^8$ peut former, avec au moins un autre des groupes $R^1$ à $R^8$ et avec le ou les atomes de carbone auxquels lesdits groupes sont reliés, un cycle ou hétérocycle hydrocarboné saturé ou insaturé, éventuellement substitué, et comprenant de 3 à 10 chaînons; et
  - au moins une des paires ($R^1$, $R^2$), ($R^3$, $R^4$), ($R^5$, $R^6$) et ($R^7$, $R^8$) peut former, avec l'atome de carbone auquel ladite paire est reliée, un groupe carbonyle C=O ou un groupe de 2 atomes de carbone reliés par une double liaison : C=C, dont l'autre atome de carbone porte 2 substituants choisis parmi un atome d'hydrogène ou un radical $C_1$-$C_4$ alkyle ;

- x et y sont des nombres entiers, identiques ou différents, compris dans une fourchette allant de 0 à 4, la somme x + y étant comprise dans une fourchette allant de 0 à 4 ;
- $R^9$, $R^{10}$, $R^{11}$ et $R^{12}$, identiques ou différents, représentent :

  - un atome d'hydrogène ou d'halogène ; ou
  - un radical comprenant de 1 à 22 atomes de carbone et choisi parmi alkyle, alcényle, alcoxycarbonyle, alcényloxycarbonyle, alkylcarbonyloxy, alcénylcarbonyloxy, alkylcarbonyloxyalkyl, la chaîne hydrocarbonée dudit radical pouvant éventuellement être interrompue par au moins un atome d'oxygène ou un atome de soufre ; en outre:
  - au moins un des groupes $R^9$ à $R^{12}$ peut former, avec au moins un autre des groupes $R^9$ à $R^{12}$ et avec le ou les atomes de carbone auxquels lesdits groupes sont reliés, un cycle ou hétérocycle hydrocarboné saturé ou insaturé, éventuellement substitué, et comprenant de 3 à 10 chaînons; et
  - au moins une des paires ($R^9$, $R^{10}$) et ($R^{11}$, $R^{12}$) peut former avec l'atome de carbone auquel ladite paire est reliée un groupe de 2 atomes de carbone reliés par une double liaison : C=C, dont l'autre atome de carbone porte 2 substituants choisis parmi un atome d'hydrogène ou un radical $C_1$-$C_4$ alkyle ; et
  - l'atome de carbone porteur de l'un des groupes de la paire ($R^9$, $R^{10}$) peut être relié à l'atome de carbone porteur de l'un des groupes de la paire ($R^{11}$, $R^{12}$) par une double liaison, étant entendu que, conformément aux règles de valence, un seul des groupes de chacune de ces 2 paires est alors présent ;

- $R^{13}$ représente :

  - un atome d'oxygène ou de soufre, ou
  - un radical divalent $-CH_2-$, -C(=O)- ou $-NR^0-$ dans lequel $R^0$ est un radical alkyle ou alcényle comprenant de 1 à 22 atomes de carbone ;

- n1 et n2, identiques ou différents, sont chacun un nombre entier ou nul dont la somme est désignée par n ;
- m est un nombre entier supérieur ou égal à 0 ;
- p1 et p2, identiques ou différents, sont chacun un nombre entier ou nul dont la somme p1 + p2 est non nulle et vérifie l'équation : p1 + p2 = q x (z + 1) dans laquelle :

  - q est un nombre entier supérieur à 0 ; et
  - z est un nombre entier allant de 1 à 5 ; et

- n1, n2, m, p1 et p2 étant en outre tels que la masse moléculaire moyenne en nombre Mn du polymère de formule (I) est comprise dans une fourchette allant de 400 à 100 000 g/mol et son indice de polymolécularité est compris dans un domaine allant de 1,0 à 3,0.

**2.** Polymère hydrocarboné selon la revendication 1, **caractérisé en ce que**:

- $R^1$, $R^2$, $R^3$, $R^4$, $R^5$, $R^6$, $R^7$ et $R^8$ représentent un atome d'hydrogène ou un radical alkyle comprenant de 1 à 14 atomes de carbone ;

- les nombres entiers x et y sont compris dans une fourchette allant de 0 à 2, la somme x + y étant comprise dans une fourchette allant de de 0 à 2 ;
- x est égal à 1 et y est égal à 1 ;
- $R^9$, $R^{10}$, $R^{11}$ et $R^{12}$ représentent un atome d'hydrogène ou un radical dont la partie hydrocarbonée comprend de 1 à 14 atomes de carbone ;
- z est un nombre entier égal à 1 ou 2 ; et/ou
- la masse moléculaire moyenne en nombre Mn est comprise dans une fourchette allant de 1000 à 50 000 g/mol.

3. Polymère hydrocarboné selon l'une des revendications 1 ou 2, **caractérisé en ce que** :

- lorsque m est non nul et que n1 et n2 sont chacun égal à 0, alors le rapport : m / (p1 +p2 + m) est compris dans l'intervalle allant de 30 à 70 % ; ou
- lorsque m est égal à 0 et que la somme n1 + n2 est non nulle, alors au moins un des groupes $R^1$, $R^2$, $R^3$, $R^4$, $R^5$, $R^6$, $R^7$ et $R^8$ est autre qu'un atome d'hydrogène, et le rapport : (n1 + n2) / (p1 + p2 + n1 + n2) est compris dans l'intervalle allant de 30 à 70 %; ou
- lorsque m est non nul, que la somme n1 + n2 est non nulle et que chacun des groupes $R^1$, $R^2$, $R^3$, $R^4$, $R^5$, $R^6$, $R^7$ et $R^8$ est un atome d'hydrogène, alors le rapport : m / (p1 + p2 + n1 + n2 + m) est compris dans l'intervalle allant de 30 à 70 %;ou
- lorsque m est non nul, que la somme n1 + n2 est non nulle et que au moins un des groupes $R^1$, $R^2$, $R^3$, $R^4$, $R^5$, $R^6$, $R^7$ et $R^8$ est autre qu'un atome d'hydrogène, alors le rapport : (m + n1 + n2) / (p1 + p2 + n1 + n2 + m) est compris dans l'intervalle allant de 30 à 70 %.

4. Polymère hydrocarboné selon l'une des revendications 1 à 3, **caractérisé en ce qu'**il a la formule (I') suivante :

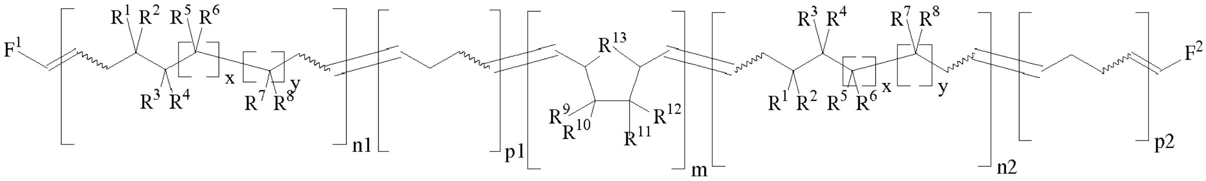

(I')

dans laquelle la liaison ~~~~ est une liaison orientée géométriquement d'un côté ou de l'autre par rapport à la double liaison.

5. Polymère hydrocarboné selon l'une des revendications 1 à 4, **caractérisé en ce que** m est égal à 0, le polymère étant de formule (II) suivante :

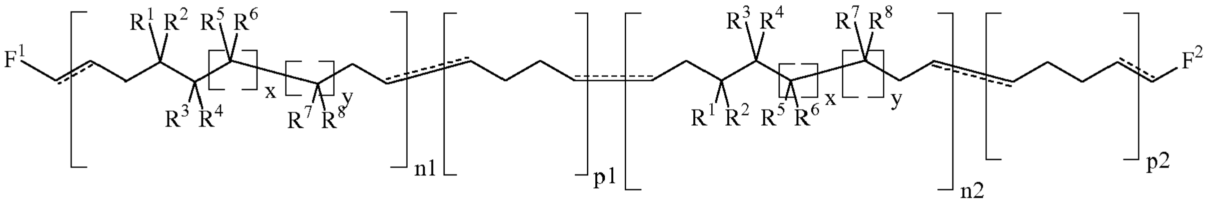

(II)

6. Polymère hydrocarboné selon la revendication 5, **caractérisé en ce qu'**il a la formule (II') suivante :

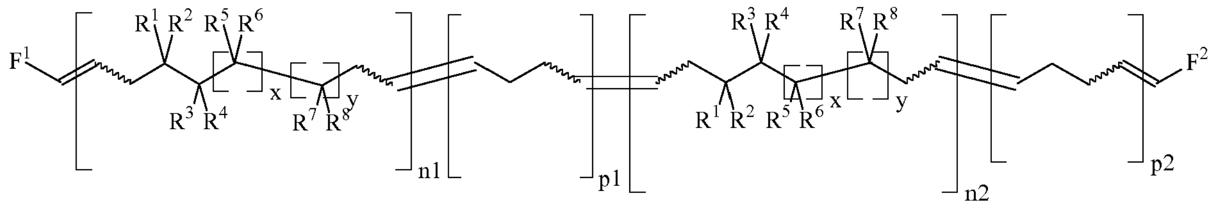

(II')

7. Polymère hydrocarboné selon l'une des revendications 1 à 4, **caractérisé en ce que** n1 et n2 sont chacun égal à 0, le polymère étant de formule (III) suivante :

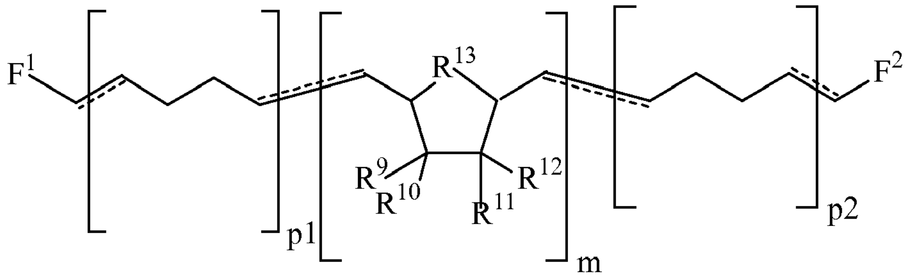

(III)

8. Polymère hydrocarboné selon la revendication 7, **caractérisé en ce qu'**il a la formule (III') suivante :

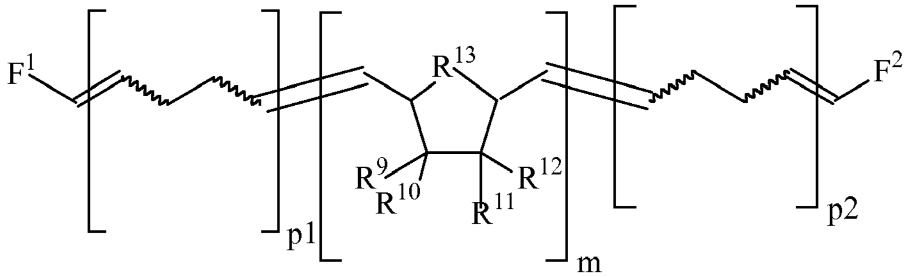

(III')

9. Polymère hydrocarboné selon l'une des revendications 1 à 4, **caractérisé en ce que** n1, n2 et m sont chacun égal à 0, le polymère étant de formule (IV) suivante :

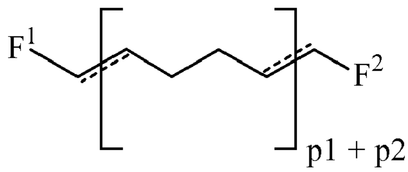

(IV)

10. Polymère hydrocarboné selon la revendication 9, **caractérisé en ce qu'**il a la formule (IV') suivante :

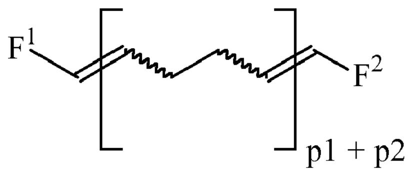

(IV')

**11.** Polymère hydrocarboné selon l'une des revendications 1 à 10, **caractérisé en ce que** le radical A représente un radical méthylène ; et/ou Z est tel que le groupe divalent -A-Z- est le groupe -A-OC(=O)- et le groupe divalent -Z-A-est le groupe -C(=O)O-A- .

**12.** Polymère hydrocarboné selon l'une des revendications 1 à 11, **caractérisé en ce que** g1=d1=0 ou g2=d2=1.

**13.** Procédé de préparation d'un polymère hydrocarboné tel que défini dans l'une des revendications 1 à 12, ledit procédé comprenant au moins :

**(i)** une étape de polymérisation par ouverture de cycle par métathèse en présence :

(a) d'un catalyseur de métathèse ;
(b) d'un agent de transfert de chaîne qui est :

- lorsque $F^1$ et $F^2$ sont les radicaux monovalents de formules respectives (IIa) et (IIb) : un composé mono ou di-époxydé de formules respectives (E1) et (E2) :

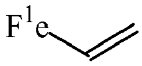 (E1) 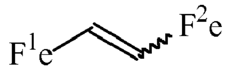 (E2)

où $F^1e$ et $F^2e$ sont les radicaux monovalents de formules respectives (IIea) et (IIeb) :

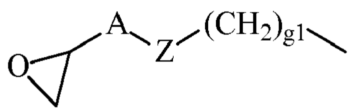 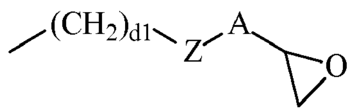

(IIea) (IIeb)

; et
- lorsque $F^1$ et $F^2$ sont les radicaux monovalents de formule respective (II'a) et (II'b) : un composé di-époxydé de formule (E'2) :

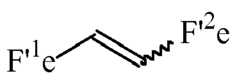

(E'2)

où $F'^1e$ et $F'^2e$ sont les radicaux monovalents de formule respective (II'ea) et (II'eb) :

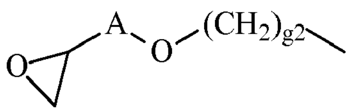 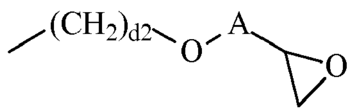

(II'ea) (II'eb)

étant entendu que dans les formules ci-dessus la liaison  est une liaison simple carbone-carbone orientée géométriquement d'un côté ou de l'autre par rapport à la double liaison ;

(c) d'un composé de formule (C) :

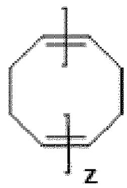

(C)

(d) éventuellement d'un composé de formule (D) :

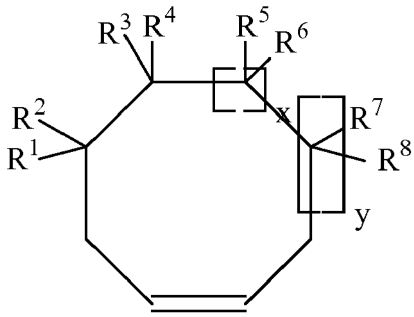

(D)

et

(e) éventuellement d'un composé de formule (E) :

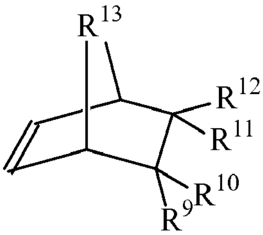

(E)

ladite étape de polymérisation conduisant à la formation d'un polymère à groupes époxydes terminaux de formule (V) :

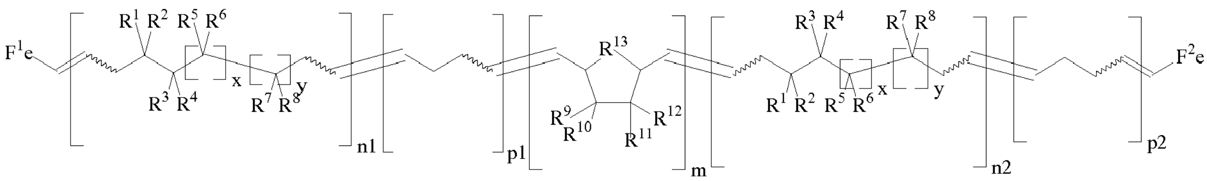

ou (V'):

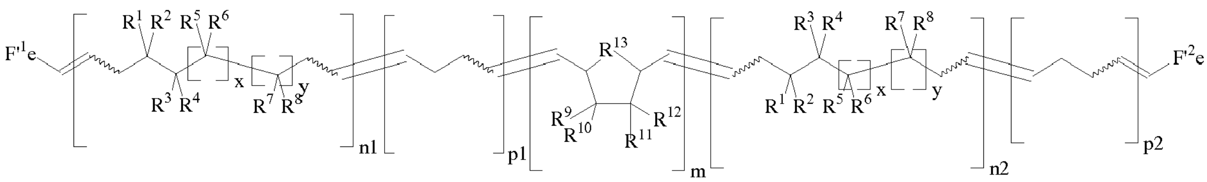

dans lesquelles $F^1e$, $F^2e$, $F'^1e$ et $F'^2e$ sont tels que définis précédemment et, dans le cas où le CTA de formule (E1) est mis en oeuvre : $F^1e = F^2e$ ;
ladite étape de polymérisation étant en outre mise en oeuvre ;

- pendant une durée allant de 2 à 24 heures et à une température comprise dans un intervalle de 20 à 60 °C ; et
- avec un rapport r égal au rapport du nombre de moles dudit CTA :

  - au nombre de moles du composé de formule (C), si celui-ci est le seul réactif autre que le CTA mis en oeuvre dans la réaction, ou
  - à la somme du nombre de moles du composé de formule (C) et du nombre de moles des composés de formule (D) et/ou (E), si les composés de formule (D) et/ou (E) sont également mis en oeuvre dans la réaction,

compris dans un intervalle allant de 0,0010 à 1,0 ; puis

**(ii)** une étape de dithiocarbonation du polymère de formule (V) ou (V') obtenu à l'étape précédente, par réaction avec du disulfure de carbone ($CS_2$) en présence d'un composé halogéné du lithium, à une température allant de 10 à 45°C.

**14.** Utilisation comme adhésif du polymère hydrocarboné tel que défini dans l'une des revendications 1 à 12, en mélange avec un composé aminé comprenant au moins deux groupements amine.

**15.** Procédé d'assemblage de deux substrats par collage, comprenant :

- l'enduction sur au moins un des deux substrats à assembler d'une composition adhésive liquide obtenue par mélange d'un composé aminé comprenant au moins deux groupements aminés avec le polymère hydrocarboné tel que défini dans l'une des revendications 1 à 12 ; puis
- la mise en contact effective des deux substrats.

Europäisches Patentamt
European Patent Office
Office européen des brevets

## RAPPORT DE RECHERCHE EUROPEENNE

Numéro de la demande
EP 17 18 2345

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DATABASE CAPLUS, [Online]<br>19 septembre 2013 (2013-09-19), YOSHIWARA AKIHIKO: "Polymerizable composition, (crosslinkable) resin molding therefrom, and (crosslinked) resin composite molding with good adhesion to different materials therewith", XP002745123, extrait de CAPLUS; STN Database accession no. 2013-1466222<br>* abrégé *<br>-& WO 2013/137175 A1 (ZEON CORP [JP]; YOSHIWARA AKIHIKO [JP])<br>19 septembre 2013 (2013-09-19)<br>* abrégé * | 1-15 | INV.<br>C08G61/08<br>C08G61/12<br>C08G71/04<br>C08G75/14<br>C09J165/00<br>C08L65/00 |
| A | WO 2014/091173 A1 (BOSTIK SA [FR]; CENTRE NAT RECH SCIENT [FR])<br>19 juin 2014 (2014-06-19)<br>* exemple 4 * | 1-15 | |
| A | EP 1 233 030 A1 (KYOWA YUKA KK [JP])<br>21 août 2002 (2002-08-21)<br>* revendications 1,8,16,19; exemple 6 * | 1-15 | DOMAINES TECHNIQUES RECHERCHES (IPC)<br>C08G<br>C09J<br>C08L |
| A,D | WO 2005/016908 A1 (HENKEL KGAA [DE]; MOTOKUCHO SUGURU [JP]; SUDO ATSUSHI [JP]; ENDO TAKES) 24 février 2005 (2005-02-24)<br>* abrégé; revendications 1,24 *<br>* page 4, troisième paragraphe * | 1-15 | |
| A,D | WO 95/35290 A1 (EASTMAN CHEM CO [US])<br>28 décembre 1995 (1995-12-28)<br>* abrégé; revendications 1,2 * | 1-15 | |

-/--

Le présent rapport a été établi pour toutes les revendications

1

| Lieu de la recherche | Date d'achèvement de la recherche | Examinateur |
|---|---|---|
| Munich | 18 août 2017 | Meiners, Christian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Europäisches Patentamt
European Patent Office
Office européen des brevets

## RAPPORT DE RECHERCHE EUROPEENNE

Numéro de la demande
EP 17 18 2345

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 6 465 590 B1 (MAUGHON BOB R [US] ET AL) 15 octobre 2002 (2002-10-15) * colonne 3, ligne 15 - colonne 15, ligne 55 * ----- | 1-15 | |
| A | WO 2016/062780 A1 (MICHELIN & CIE [FR]; MICHELIN RECH TECH [CH]) 28 avril 2016 (2016-04-28) * abrégé * * page 17, ligne 32 - page 19, ligne 32; revendication 1 * ----- | 1-15 | |

DOMAINES TECHNIQUES RECHERCHES (IPC)

Le présent rapport a été établi pour toutes les revendications

1

| Lieu de la recherche | Date d'achèvement de la recherche | Examinateur |
|---|---|---|
| Munich | 18 août 2017 | Meiners, Christian |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 17 18 2345

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-08-2017

| Document brevet cité au rapport de recherche | Date de publication | Membre(s) de la famille de brevet(s) | Date de publication |
|---|---|---|---|
| WO 2013137175 A1 | 19-09-2013 | JP 5994843 B2 | 21-09-2016 |
| | | JP WO2013137175 A1 | 03-08-2015 |
| | | WO 2013137175 A1 | 19-09-2013 |
| WO 2014091173 A1 | 19-06-2014 | EP 2931760 A1 | 21-10-2015 |
| | | ES 2601156 T3 | 14-02-2017 |
| | | FR 2999577 A1 | 20-06-2014 |
| | | US 2015315310 A1 | 05-11-2015 |
| | | WO 2014091173 A1 | 19-06-2014 |
| EP 1233030 A1 | 21-08-2002 | AU 7451700 A | 30-04-2001 |
| | | EP 1233030 A1 | 21-08-2002 |
| | | US 6759484 B1 | 06-07-2004 |
| | | WO 0123447 A1 | 05-04-2001 |
| WO 2005016908 A1 | 24-02-2005 | EP 1506964 A1 | 16-02-2005 |
| | | WO 2005016908 A1 | 24-02-2005 |
| WO 9535290 A1 | 28-12-1995 | AU 681798 B2 | 04-09-1997 |
| | | BR 9508035 A | 16-09-1997 |
| | | CA 2192690 A1 | 28-12-1995 |
| | | DE 69505120 D1 | 05-11-1998 |
| | | DE 69505120 T2 | 18-02-1999 |
| | | EP 0765315 A1 | 02-04-1997 |
| | | ES 2121391 T3 | 16-11-1998 |
| | | JP H10501552 A | 10-02-1998 |
| | | TW 311912 B | 01-08-1997 |
| | | US 5391773 A | 21-02-1995 |
| | | US 5498584 A | 12-03-1996 |
| | | WO 9535290 A1 | 28-12-1995 |
| US 6465590 B1 | 15-10-2002 | US 6465590 B1 | 15-10-2002 |
| | | US 2002169263 A1 | 14-11-2002 |
| | | US 2005176906 A1 | 11-08-2005 |
| | | US 2006178493 A1 | 10-08-2006 |
| WO 2016062780 A1 | 28-04-2016 | FR 3027601 A1 | 29-04-2016 |
| | | WO 2016062780 A1 | 28-04-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014091173 A
- WO 2005016908 A
- WO 9535290 A
- US 5849851 A
- CN 102757409
- US 3448125 A, ROHM & HAAS
- EP 0208272 A, MONTEDISON
- EP 0911326 A
- WO 200104173 A
- WO 2011038057 A


### Littérature non-brevet citée dans la description


- **G.D. YADAV ; D.V. SATOSKA.** Kinetics of Epoxidation of Alkyl Esters of Undecylenic Acid : Comparison of Traditional Routes vs. Ishii-Venturello Chemistry. *JAOCS,* 1997, vol. 74 (4), 397-407
- **A. DIALLO et al.** *Polymer Chemistry,* 07 Avril 2014, vol. 5 (7), 2583-2591
- **KOBAYASHI et al.** *J. Am. Chem. Soc.,* 2011, vol. 133, 5794-5797